# EUROPEAN PATENT APPLICATION

(11) **EP 4 258 707 A1**
(43) Date of publication of application: **11.10.2023**
(21) Application number: 21900419.9
(22) Date of filing: 18.11.2021
(51) Int. Cl.: H04W 4/38, H04W 52/02

(54) **WIRELESS COMMUNICATION SYSTEM AND WIRELESS COMMUNICATION METHOD**

(30) Priority: 03.12.2020 JP 2020201115
(71) Applicant: Panasonic Holdings Corporation, Osaka 571-8501 (JP)
(72) Inventor: UESUGI, Mitsuru, Kadoma-shi, Osaka 571-0057 (JP)
(74) Representative: SSM Sandmair
(86) International application number: PCT/JP2021/042385
(87) International publication number: WO 2022/118664

(57) **Abstract**

A wireless communication system according to an embodiment of the present disclosure is provided with a terminal that acquires predetermined data repeatedly and operates while switching between a first mode and a second mode having lower power consumption than the first mode, and a relay unit that operates while switching between a third mode and a fourth mode having lower power consumption than the third mode. The relay unit transmits a polling signal to the terminal in the third mode within a specific time, transitions to the fourth mode within the specific time after transmitting the polling signal, and transitions to the third mode before the specific time elapses. The terminal operates in the first mode while holding the predetermined data, and transitions to the second mode after transmitting the predetermined data to the relay unit.

## Description

### Technical Field

The present disclosure relates to a radio communication system and a radio communication method.

### Background Art

When a radio network is constructed with Low Power Wide Area (LPWA) or the like, the communication area can be expanded by relaying. As an example, a case where a terminal equipped with a sensor reports sensing data obtained by the sensor to a base station at certain intervals is considered. In this example, the terminal may report the sensing data to the repeater, and the repeater may report the sensing data to the base station.

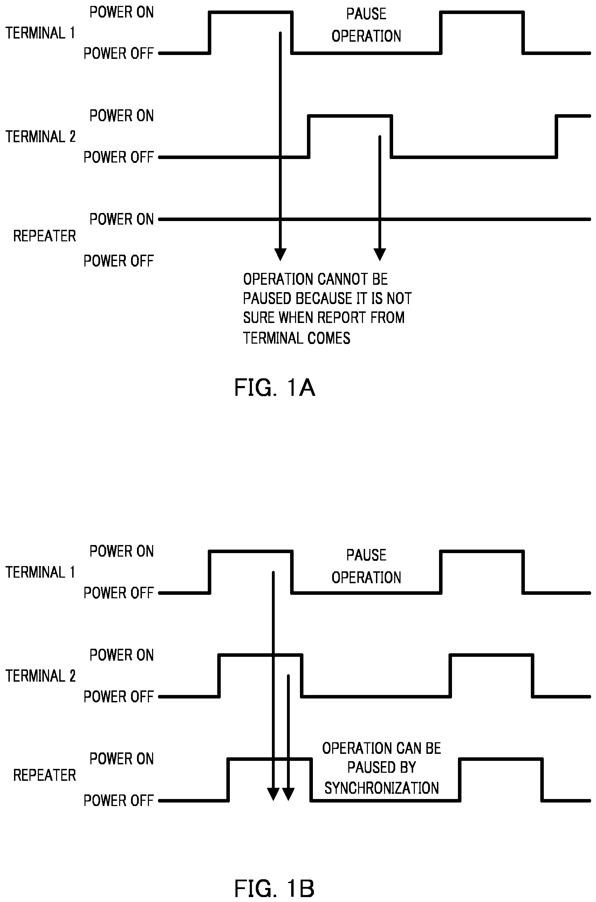

Focusing on the power consumption, the sensor and the terminal only perform sensing and reporting, respectively, at certain intervals; therefore, the terminal can pause the operation in a time period in which the reporting is not performed, which results in reducing the power consumption. However, as illustrated in FIG. 1A, the repeater cannot pause the operation because it is not sure when the report from the terminal comes. Therefore, the repeater cannot reduce its power consumption very much.

On the other hand, as illustrated in FIG. 1B, when both the terminal and the repeater perform timing synchronization with the device that manages the reference timing, such as a base station, and match the operation pausing timing of the terminal and the repeater with each other, the repeater can pause the operation. Such a technique using timing synchronization is described in, for example, Patent Literature (hereinafter, referred to as PTL) 1 and PTL 2. In the above-described example, because the terminal reports the sensing data at certain intervals, the repeater can pause the operation by using the timing synchronization.

### Citation List

### Patent Literature

PTL 1
   Japanese Patent Application Laid-Open No. 2014-17745
PTL 2
   Japanese Patent No. 6544660

### Summary of Invention

However, when the terminal and the repeater are asynchronous, it is still difficult for the repeater to pause the operation.

One non-limiting and exemplary embodiment of the present disclosure facilitates providing a radio communication system and a radio communication method each capable of relaying data from a terminal without a significant delay even when the terminal and a repeater are asynchronous, and capable of saving power of the repeater and the terminal by pausing the operation of the repeater and the terminal.

A radio communication system according to an embodiment present disclosure includes: a terminal that includes a data generation device, repeatedly obtains predetermined data from the data generation device, and operates while switching between a first mode and a second mode whose power consumption is lower than power consumption of the first mode; and a repeater that is capable of communicating with the terminal, and operates while switching between a third mode and a fourth mode whose power consumption is lower than power consumption of the third mode. The repeater transmits a polling signal to the terminal in the third mode within a predetermined time, transitions from the third mode to the fourth mode within the predetermined time after transmitting the polling signal, and transitions from the fourth mode to the third mode before the predetermined time elapses. The terminal operates in the first mode while the terminal has the predetermined data, and transitions from the first mode to the second mode after transmitting the predetermined data to the repeater in response to the polling signal.

A radio communication method according to an embodiment of the present disclosure is a radio communication method in a radio communication system including: a terminal that includes a data generation device, repeatedly obtains predetermined data from the data generation device, and operates while switching between a first mode and a second mode whose power consumption is lower than power consumption of the first mode; and a repeater that is capable of communicating with the terminal and operates while switching between a third mode and a fourth mode whose power consumption is lower than power consumption of the third mode, and the radio communication method including: transmitting, by the repeater, a polling signal to the terminal in the third mode within a predetermined time, performing, by the repeater, a transition from the third mode to the fourth mode within the predetermined time after the repeater transmits the polling signal, performing, by the repeater, a transition from the fourth mode to the third mode before the predetermined time elapses, operating, by the terminal, in the first mode while the terminal has the predetermined data, performing, by the terminal, a transition from the first mode to the second mode after the terminal transmits the predetermined data to the repeater in response to the polling signal.

It should be noted that a general or specific embodiment may be implemented as a system, an apparatus, a method, an integrated circuit, a computer program, a storage medium, or any selective combination thereof.

According to an embodiment of the present disclosure, it is possible to relay data from the terminal without a significant delay even when the terminal and the repeater are asynchronous, and to save the power of the repeater by pausing the operation of the repeater.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1A is a diagram for describing a related art;
FIG. 1B is another diagram for describing the related art;
FIG. 2 is a timing diagram for describing an overview of an exemplary data communication between a terminal and a repeater according to an embodiment of the present disclosure;
FIG. 3 illustrates an exemplary configuration of a radio communication system according to Embodiment 1 of the present disclosure;
FIG. 4 is a block diagram illustrating an exemplary basic configuration of a communication apparatus including a terminal, a repeater, and a base station in the radio communication system according to Embodiment 1 of the present disclosure;
FIG. 5 is a sequence diagram for describing the first example of a data communication between the terminal and the repeater in the radio communication system according to Embodiment 1 of the present disclosure;
FIG. 6 is a sequence diagram for describing the second example of the data communication between the terminal and the repeater in the radio communication system according to Embodiment 1 of the present disclosure;
FIG. 7 is a sequence diagram for describing the third example of the data communication between the terminal and the repeater in the radio communication system according to Embodiment 1 of the present disclosure;
FIG. 8 is a sequence diagram for describing the fourth example of the data communication between the terminal and the repeater in the radio communication system according to Embodiment 1 of the present disclosure;
FIG. 9 is a sequence diagram for describing the fifth example of the data communication between the terminal and the repeater in the radio communication system according to Embodiment 1 of the present disclosure;
FIG. 10A is a diagram for describing exemplary path selection of the data communication between the terminal, the repeater, and the base station in the radio communication system according to Embodiment 1 of the present disclosure;
FIG. 10B is another diagram for describing the exemplary path selection of the data communication between the terminal, the repeater, and the base station in the radio communication system according to Embodiment 1 of the present disclosure;
FIG. 10C is still another diagram for describing the exemplary path selection of the data communication between the terminal, the repeater, and the base station in the radio communication system according to Embodiment 1 of the present disclosure;
FIG. 10D is still another diagram for describing the exemplary path selection of the data communication between the terminal, the repeater, and the base station in the radio communication system according to Embodiment 1 of the present disclosure;
FIG. 11 is a diagram for describing further exemplary path selection of the data communication between the terminal, the repeater, and the base station in the radio communication system according to Embodiment 1 of the present disclosure;
FIG. 12A is a timing diagram for describing an exemplary data communication between the terminal, the repeater, and the base station based on the hierarchical structure in FIG. 11 according to Embodiment 1 of the present disclosure;
FIG. 12B is another timing diagram for describing the exemplary data communication between the terminal, the repeater, and the base station based on the hierarchical structure in FIG. 11 according to Embodiment 1 of the present disclosure;
FIG. 13A is a diagram for describing an exemplary configuration of a hierarchy of the network constituting the radio communication system according to Embodiment 1 of the present disclosure;
FIG. 13B is another diagram for describing the exemplary configuration of the hierarchy of the network constituting the radio communication system according to Embodiment 1 of the present disclosure;
FIG. 13C is still another diagram for describing the exemplary configuration of the hierarchy of the network constituting the radio communication system according to Embodiment 1 of the present disclosure;
FIG. 13D is still another diagram for describing the exemplary configuration of the hierarchy of the network constituting the radio communication system according to Embodiment 1 of the present disclosure;
FIG. 13E is still another diagram for describing the exemplary configuration of the hierarchy of the network constituting the radio communication system according to Embodiment 1 of the present disclosure;
FIG. 14 is a sequence diagram for describing a flow of configuring the hierarchy of the network constituting the radio communication system in FIGS. 13A to 13E according to Embodiment 1 of the present disclosure;
FIG. 15A is a diagram for describing an exemplary reconfiguration of the hierarchy of the network constituting the radio communication system according to Embodiment 1 of the present disclosure;
FIG. 15B is another diagram for describing the exemplary reconfiguration of the hierarchy of the network constituting the radio communication system according to Embodiment 1 of the present disclosure;
FIG. 15C is still another diagram for describing the exemplary reconfiguration of the hierarchy of the network constituting the radio communication system according to Embodiment 1 of the present disclosure;
FIG. 15D is still another diagram for describing the exemplary reconfiguration of the hierarchy of the network constituting the radio communication system according to Embodiment 1 of the present disclosure;
FIG. 16 is a sequence diagram for describing an exemplary data communication between a terminal, a repeater, and a base station in a radio communication system according to Embodiment 2 of the present disclosure;
FIG. 17 is a diagram for describing an exemplary communication between terminals via the base station and the repeater and an exemplary communication between terminals via the repeater without passing through the base station according to Embodiment 2 of the present disclosure;
FIG. 18 is a sequence diagram for describing the first example of a data communication between the terminals in the radio communication system according to Embodiment 2 of the present disclosure;
FIG. 19 is a sequence diagram for describing the second example of the data communication between the terminals in the radio communication system according to Embodiment 2 of the present disclosure;
FIG. 20 is a sequence diagram for describing the third example of the data communications between the terminals in the radio communication system according to Embodiment 2 of the present disclosure;
FIG. 21A is a diagram for describing an exemplary polling interval of the repeater according to the embodiment of the present disclosure;
FIG. 21B is a diagram for describing another exemplary polling interval of the repeater according to the embodiment of the present disclosure;
FIG. 21C is a diagram for describing still another exemplary polling interval of the repeater according to the embodiment of the present disclosure; and
FIG. 21D is a diagram for describing still another exemplary polling interval of the repeater according to the embodiment of the present disclosure.

### Description of Embodiments

Hereinafter, embodiments of the present disclosure will be described in detail with reference to the drawings as appropriate. However, unnecessarily detailed description may be omitted. For example, detailed descriptions of well-known matters and redundant descriptions of substantially the same configuration may be omitted. This is to avoid unnecessary redundancy of the following description and to facilitate understanding by a person skilled in the art.

Note that, the accompanying drawings and the following description are provided for a person skilled in the art to sufficiently understand the present disclosure, and are not intended to limit the subject matter described in the claims.

### [Overview of One Aspect of Present Disclosure]

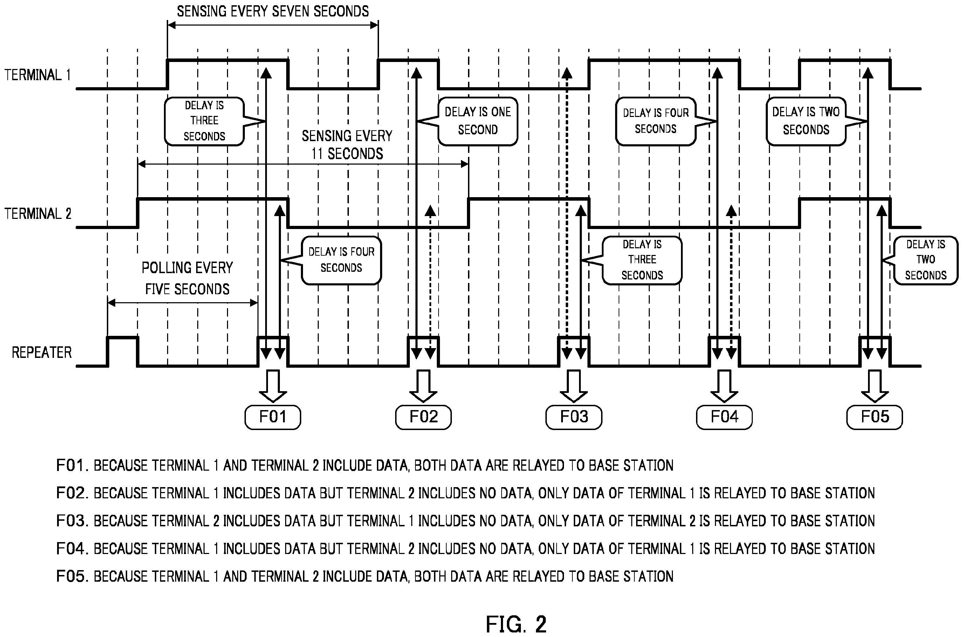

First, an overview of one aspect of the present disclosure will be described with reference to FIG. 2. FIG. 2 is a timing diagram for describing an overview of an exemplary data communication between a terminal and a repeater according to an embodiment of the present disclosure. FIG. 2 illustrates exemplary data reporting between terminal 1 and the repeater and exemplary data reporting between terminal 2 and the repeater. In the example illustrated in FIG. 2, the interval between the dotted lines represents one second. Further, in the example illustrated in FIG. 2, sensing by terminal 1 and terminal 2 (more specifically, by sensor 1 (not illustrated) and sensor 2 (not illustrated) mounted on or connected to terminal 1 and terminal 2, respectively) is performed at the timing of the rising edge in the timing diagram. Further, in the example illustrated in FIG. 2, the data collection by the repeater is performed at the timing of the rising edge in the timing diagram. High and Low periods in the timing diagram represent a steady mode and a operation pausing mode, respectively. The steady mode and the operation pausing mode will be described later.

Sensor 1 mounted on or connected to terminal 1 measures (senses) the temperature or the like of the subject at certain intervals (e.g., every seven seconds in FIG. 2), and transmits the sensing data to terminal 1 with the date and time when the sensing data is obtained. Terminal 1 stores the sensing data received from sensor 1 in an internal memory (or another storage apparatus), associating the sensing data with the date and time when the sensing data is obtained. In the following description, the sensing data and the date and time when the sensing data is obtained are treated as a set, and the date and time when the sensing data is obtained will not be described.

Similarly, sensor 2 mounted on or connected to terminal 2 measures (senses) the temperature or the like of the subject at certain intervals (e.g., every 11 seconds in FIG. 1), and transmits the sensing data to terminal 2. Terminal 2 stores the sensing data received from sensor 2 in an internal memory (or another storage apparatus).

The repeater transmits a signal for confirming whether terminal 1 includes sensing data to terminal 1 at certain intervals (e.g., every five seconds in FIG. 2) in this example. Similarly, the repeater transmits a signal for confirming whether terminal 2 includes sensing data to terminal 2 at certain intervals. Hereinafter, the above-described signal for confirming whether a certain communication apparatus includes a given data such as sensing data is referred to as a "polling signal". The polling signals may be transmitted at certain intervals, may be transmitted at intervals having regularity, or may be transmitted at intervals having no regularity.

When the repeater transmits the first polling signal illustrated in FIG. 2 to terminal 1, terminal 1 transmits the sensing data stored in the internal memory to the repeater for relaying with a three-second delay, and deletes the sensing data. Similarly, when the repeater transmits the first polling signal to terminal 2, terminal 2 transmits the sensing data stored in the internal memory to the repeater for relaying with a four-second delay, and deletes the sensing data.

After transmitting the sensing data, terminal 1 transitions (switches) from the steady mode, which is the normal operation mode, to the operation pausing mode whose power consumption is lower than that of the steady mode. The operation pausing mode continues until the sensing timing (next sensing timing) at which sensor 1 senses the temperature and/or the like next. Similarly, after transmitting the sensing data, terminal 2 transitions from the steady mode to the operation pausing mode. The operation pausing mode continues until the next sensing timing. Thereafter, terminal 1 and terminal 2 each transition from the operation pausing mode to the steady mode at the next sensing timing. In this specification, a time interval between a precise timing at which the sensor senses and a precise timing at which the sensor senses next is referred to as a sensing interval.

Meanwhile, the repeater receives sensing data from both terminal 1 and terminal 2 within a predetermined period of time for receiving sensing data from terminal 1 and terminal 2 after transmitting the first polling signal, and thus relays (transmits) both of these sensing data to a base station (not illustrated). After transmitting the sensing data to the base station, the repeater transitions from the steady mode, which is the normal operation mode, to the operation pausing mode whose power consumption is lower than that of the steady mode. The operation pausing mode continues until the next timing at which the repeater transmits a polling signal. In this specification, a time interval between a precise timing at which the repeater transmits a polling signal and a precise timing at which the repeater transmits a polling signal next is referred to as a polling interval.

When the repeater transmits the second polling signal to terminal 1 after five seconds of the polling interval passes after the repeater transmits the first polling signal, terminal 1 transmits the sensing data stored in the internal memory to the repeater for relaying with a one-second delay. Similarly, when the repeater transmits the second polling signal to terminal 2, terminal 2 does not report to the repeater because terminal 2 is in the operation pausing mode (includes no sensing data).

After transmitting the sensing data, terminal 1 transitions to the operation pausing mode. The operation pausing mode continues until the next sensing timing. Thereafter, terminal 1 and terminal 2 each transition from the operation pausing mode to the steady mode at the next sensing timing.

The repeater receives sensing data from only terminal 1 in the predetermined period of time for receiving sensing data from terminal 1 and terminal 2 after transmitting the second polling signal, and thus the repeater relays (transmits) only this sensing data to the base station. After transmitting the sensing data to the base station, the repeater transition to the operation pausing mode. The operation pausing mode continues until the next timing at which the repeater transmits a polling signal.

When the repeater transmits the third polling signal to terminal 1 after the polling interval elapses after the repeater transmits the second polling signal, terminal 1 does not report to the repeater because terminal 1 is in the operation pausing mode (includes no sensing data). Similarly, when the repeater transmits the third polling signal to terminal 2, terminal 2 transmits the sensing data stored in the internal memory to the repeater for relaying with a three-second delay.

Terminal 1 remains in the operation pausing mode until the next sensing timing. After transmitting the sensing data, terminal 2 transitions to the operation pausing mode. The operation pausing mode continues until the next sensing timing. Terminal 1 and terminal 2 each transition from the operation pausing mode to the steady mode at the next sensing timing.

The repeater receives sensing data from only terminal 2 in the predetermined period of time for receiving sensing data from terminal 1 and terminal 2 after transmitting the third polling signal, and thus the repeater relays (transmits) only this sensing data to the base station. After transmitting the sensing data to the base station, the repeater transition to the operation pausing mode. The operation pausing mode continues until the next timing at which the repeater transmits a polling signal.

Thereafter, the same processing is repeated when the repeater transmits the fourth polling signal and the fifth polling signal illustrated in FIG. 2.

Briefly summarizing the above processing, the repeater transitions to the operation pausing mode at (substantially) certain intervals in this example, and when the repeater transitions from the operation pausing mode to the steady mode, the repeater confirms with the terminal whether the terminal includes sensing data. When the terminal includes the sensing data, the repeater causes the terminal to transmit the sensing data, and relays the sensing data to, for example, the base station. The terminal remains in the steady mode until transmitting the sensing data to the repeater (as long as the terminal includes the sensing data), and when transmitting the sensing data to the repeater, the terminal transitions to the operation pausing mode. The operation pausing mode continues until the next sensing timing. Note that, in the above-described processing, a delay occurs by the time when the repeater obtains sensing data from the terminal after the terminal obtains the sensing data, however, in a case where the thing that hardly changes, such as an air temperature, a temperature of an object, or the like is a target for sensing, a certain degree of delay is acceptable. When the polling interval of the repeater is X seconds, the delay can be reduced up to X seconds.

As described above, the repeater operates while switching the steady mode and the operation pausing mode, and when transmitting a polling signal in the steady mode within a predetermined time (polling interval), the repeater transitions from the steady mode to the operation pausing mode at least after transmitting the polling signal and within the predetermined time, and transitions from the operation pausing mode to the steady mode before the predetermined time elapses. That is, the operation pausing mode continues until the next timing at which the repeater transmits a polling signal. The terminal operates while switching between the steady mode and the operation pausing mode, and operates in the steady mode while including sensing data, and transitions from the steady mode to the operation pausing mode after transmitting the sensing data to the repeater in response to the polling signal. Note that the operation pausing mode continues until the next sensing timing. Thus, the sensing data from the terminal can be relayed without a significant delay even when the terminal and the repeater device are asynchronous, and the power of the repeater and the terminal can be saved by pausing the operation of the repeater and the terminal. Further, even when the interval in which the terminal reports to the repeater is not a certain interval, the power of the repeater and the terminal can be saved by pausing operation of the repeater and the terminal. Note that, in the above description, sensing date obtained by the sensor provided in the terminal has been described as an example of data to be reported to the repeater by the terminal, but such data is not limited to sensing data, and a device (data generation device) that generates such data is not limited to the sensor. Further examples of such data and data generation device will be described in following Embodiment 1.

### [Embodiment 1]

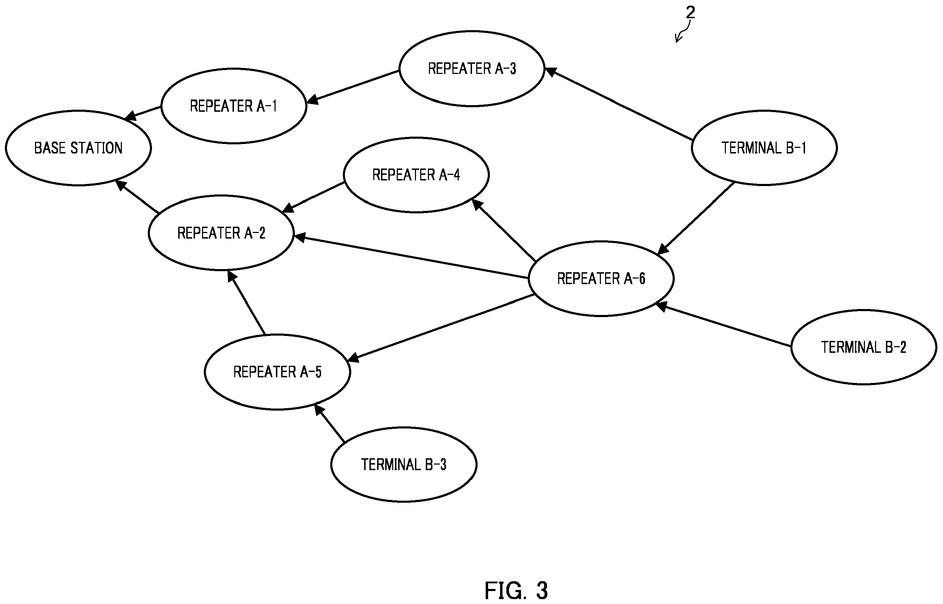

Next, a configuration and operation of radio communication system 2 according to Embodiment 1 of the present disclosure will be described with reference to FIGS. 3 to 15D.

### <Radio Communication System>

FIG. 3 illustrates an exemplary configuration of radio communication system 2 according to Embodiment 1. As illustrated, radio communication system 2 includes a base station, one or more repeaters, and one or more terminals. In the following description, the base station, the repeater, and the terminal may be collectively referred to as a "communication apparatus", and in various drawings, the repeater may be referred to as relay. The arrowed lines illustrated in FIG. 3 represent connections between communication apparatuses. In FIG. 3, there are six repeaters A-1 to A-6 and three terminals B-1 to B-3, but the number of repeaters and the number of terminals are not limited to six and three, respectively.

Embodiment 1 mainly assumes data transmission in the uplink direction, which is radio transmission of (sensing) data obtained by a sensor or the like from a terminal that a sensor or the like is mounted on or connected to as a data generation device to a repeater. Then, the repeater that has received the data from the terminal relays (transmits) the received data to the base station via one or more other repeaters or directly.

### <Basic Configuration of Communication Apparatus Including Terminal, Repeater, and Base Station>

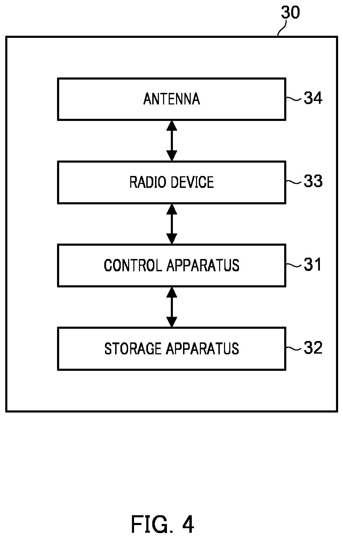

FIG. 4 is a block diagram illustrating an exemplary basic configuration of communication apparatus 30 including the terminal, the repeater, and the base station in radio communication system 2 according to Embodiment 1.

Communication apparatus 30 includes control apparatus 31, storage apparatus 32, radio device 33, and antenna 34 as a basic configuration. It is obvious that communication apparatus 30 also includes another well-known component, such as an encoder, an decoder, and/or the like.

Control apparatus 31 is configured with a controller, a processor, and/or the like. Control apparatus 31 processes data, and controls the components and the overall operation of communication apparatus 30, by executing program instructions stored in storage apparatus 32, for example.

Storage apparatus 32 includes volatile memory, non-volatile memory, cache memory, hard disk, and/or the like. Storage apparatus 32 temporarily or permanently stores data necessary for operating communication apparatus 30, program instructions for controlling the overall operation of communication apparatus 30, data (to be) received, transmitted, or generated during the operation of communication apparatus 30, and data necessary for those processes.

Radio device 33 is constituted with a well-known receiver, transmitter, transceiver, and/or the like. Radio device 33 generates a radio frequency signal, for example, by modulating a baseband signal to be transmitted or the like, for performing transmission via antenna 34. Further, radio device 33 extracts a baseband signal, for example, by demodulating a radio frequency signal received via antenna 34 or the like.

Antenna 34 transmits the radio frequency signal generated by radio device 33 as a radio wave, for example, toward a communication apparatus of a transmission destination. Further, antenna 34 receives a radio frequency signal transmitted from another communication apparatus (antenna) as a radio wave.

### <Operation of Terminal>

Communication apparatus 30 serving as a terminal (hereinafter, referred to as a terminal) includes a sensor as an internal component or an external component, as a data generation device, and is connected to such a sensor by a wire or wirelessly. Such a sensor can measure (sense) the temperature, humidity, and/or the like of the surrounding environment, and the heart rate, respiration, temperature, movement, and/or the like of a target person or an object. Note that the terminal may include a microphone, a camera, a button, a keypad, a switch, and/or the like as a data generation device instead of or in addition to the sensor, and such a microphone, a camera, a button, a keypad, a switch, and/or the like may be connected to the terminal.

The terminal, for example, obtains sensing data, such as temperature, obtained by the sensor at certain intervals, intervals having regularity, or intervals having no regularity, and stores the sensing data to storage apparatus 32 of the terminal. This sensing interval is predetermined, for example, and is stored in the sensor and storage apparatus 32 of the terminal. The sensing interval may be changed as necessary by an operator of the terminal or the like, and be stored in the sensor and storage apparatus 32 of the terminal. Then, when the terminal receives, by radio, a polling signal from communication apparatus 30 serving as a repeater (hereinafter, referred to as a repeater), the terminal transmits, by radio, the sensing data stored in storage apparatus 32 of the terminal to the repeater that has transmitted the polling signal. After transmitting the sensing data to the repeater, the terminal deletes the sensing data from storage apparatus 32 of the terminal. In some situations, a plurality of pieces of sensing data possibly remains in storage apparatus 32 of the terminal. In this case, when receiving a polling signal from the repeater, the terminal may transmit all of the plurality of pieces of sensing data to the repeater, may transmit only the newest sensing data among the plurality of pieces of sensing data to the repeater, or may transmit a predetermined number of pieces of sending data in the newest order among the plurality of pieces of sensing data to the repeater. In any case, the terminal deletes all of the plurality of pieces of sensing data from storage apparatus 32 of the terminal after transmitting the sensing data. Note that, instead of deleting the sensing data, the terminal may be configured to add a transmission-completion flag to the transmitted sensing data. In this case, when receiving a polling signal from the repeater, the terminal may transmit sensing data to which the transmission-completion flag is not added to the repeater, add the transmission-completion flag to this sensing data, and delete the sensing data to which the transmission-completion flag is added every time a predetermined period of time elapses. Note that, when the terminal includes a microphone, a camera, a button, a keypad, a switch, and/or the like as a data generation device, such a data generation device obtains data such as a telephone call, pressing of a button, input of a voice, input of an image, a report periodically generated by alive monitoring, and/or the like, and the terminal can obtain such data from the data generation device.

After transmitting the sensing data to the repeater, the terminal transitions from a steady mode, in which all the listening function of keeping waiting so as to receive data addressed to the terminal in the idle period in which transmission, reception, and transmission/reception of data are not performed can be executed, to a operation pausing mode whose power consumption is lower than the steady mode. This transition is performed by limiting the execution of some function of transmission, reception, and listening, such as by sleeping (cutting off power supply to radio device 33 and another circuit (powering off radio device 33 and another circuit)) or by slowing down the operation clock of radio device 33 and another circuit. The operation pausing mode continues until the sensing timing (next sensing timing) at which sensor connected to the terminal senses the temperature and/or the like next. Thereafter, the terminal transitions from the operation pausing mode to the steady mode at the next sensing timing to obtain sensing data from the sensor connected to the terminal.

In the present specification, the next sensing timing is not the precise timing at which the sensor performs sensing, but is the timing earlier than the precise timing at which the sensor performs sensing by a predetermined time (e.g., one second). The predetermined time can be set to an desired time in which the power of the terminal can be saved.

The terminal remains in the steady mode without changing its mode to the operation pausing mode while including sensing data, and waits for a polling signal from the repeater.

The terminal repeats obtaining of sensing data, reception of a polling signal, transmission and deletion of sensing data, changing of its mode to an operation pausing mode, changing of its mode to a steady mode, and the like.

Further, the terminal stores (that is, knows) the network topology of radio communication system 2 in storage apparatus 32 of the terminal in some cases, and does not store (that is, does not know) the network topology in other cases. The network topology represents the connection relationship, the hierarchy, and the like between the terminal, the repeater, and the base station in radio communication system 2.

### <Operation of Repeater>

The repeater transmits, by radio, a polling signal for confirming whether another communication apparatus (e.g., the terminal or another repeater) includes data to be transmitted to the repeater to another communication apparatus at certain intervals, intervals having regularity, or intervals having no regularity. Then, the repeater waits for data from another communication apparatus after transmitting the polling signa and for a predetermined period of time (e.g., three seconds) for receiving data from another communication apparatus.

When the repeater receives data (e.g., sensing data) from another communication apparatus within the predetermined period of time, the repeater relays (transmits) the received data by radio to yet another communication apparatus (e.g., communication apparatus 30 serving as a base station (hereinafter, referred to as a base station) or another repeater). Then, after transmitting the sensing data to yet another communication apparatus and within the polling interval, the repeater transitions from a steady mode, in which all the listening function of keeping waiting so as to receive data addressed to the repeater in the idle period in which transmission, reception, and transmission/reception of data are not performed can be executed, to a operation pausing mode whose power consumption is lower than the steady mode. This transition is performed by limiting the execution of some function of transmission, reception, and listening, such as by sleeping (cutting off power supply to radio device 33 and another circuit (powering off radio device 33 and another circuit)) or by slowing down the operating clock of radio device 33 and another circuit. The operation pausing mode continues until the next timing at which the repeater transmits a polling signal. The repeater transitions from the operation pausing mode to the steady mode at the next timing of transmitting a polling signal, and transmits a polling signal again.

On the other hand, even when the repeater does not receive data from another communication apparatus within the predetermined period of time after transmitting the polling signal, the repeater may transition from the steady mode to the operation pausing mode after the predetermined period of time elapses and within the polling interval. The operation pausing mode continues until the next timing at which the repeater transmits a polling signal. The repeater transitions from the operation pausing mode to the steady mode at the next timing of transmitting a polling signal, and transmits a polling signal again. Note that, when no data is received from another communication apparatus, the changing of the mode to the operation pausing mode need not be performed, and the repeater may remain in the steady mode. This is because the power of the repeater can be saved even only by changing the mode to the operation pausing mode after receiving data from another communication apparatus.

When another communication apparatus of the transmission destination to which the repeater has transmitted the polling signal in the polling interval includes sensing data, the repeater stores the sensing data received from another communication apparatus in storage apparatus 32 of the repeater. The polling interval is, for example, predetermined and stored in storage apparatus 32 of the repeater. The polling interval may be changed as necessary by an operator of the repeater or the like, and stored in storage apparatus 32 of the repeater. Then, when receiving a polling signal from yet another communication apparatus by radio, the repeater transmits, by radio, the sensing data stored in storage apparatus 32 of the repeater to yet another communication apparatus that has transmitted the polling signal. After transmitting the sensing data to yet another communication apparatus, the repeater deletes the sensing data from storage apparatus 32 of the repeater. In some situations, a plurality of pieces of sensing data possibly remain in storage apparatus 32 of the repeater. In this case, when receiving the polling signal from yet another communication apparatus, the repeater may transmit all of the plurality of pieces of sensing data to yet another communication apparatus, may transmit only the newest sensing data among the plurality of pieces of sensing data to yet another communication apparatus, or may transmit a predetermined number of pieces of sensing data in the newest order among the plurality of pieces of sensing data. In any case, the repeater deletes all of the plurality of pieces of sensing data from storage apparatus 32 of the terminal after transmitting the sensing data. Note that, instead of deleting the sensing data, the repeater may be configured to add a transmission-completion flag to the transmitted sensing data. In this case, when receiving the polling signal from yet another communication apparatus, the repeater may transmit the sensing data to which the transmission-completion flag is not added to yet another communication apparatus, add the transmission-completion flag to this sensing data, and delete the sensing data to which the transmission-completion flag is added every time the predetermined period of time elapses.

The repeater remains in the steady mode without changing its mode to the operation pausing mode while including sensing data, and waits for a polling signal from another repeater or the base station.

In the present specification, the next sensing timing for transmitting a polling signal is not the precise timing at which the repeater transmits the polling signal, but is the timing earlier than the precise timing at which the repeater transmits the polling signal by a predetermined time (e.g., one second). The predetermined time can be set to an desired time in which the power of the repeater can be saved.

The repeater possibly transmits polling signals to a plurality of communication apparatuses simultaneously (e.g., by broadcast) or sequentially (e.g., approximately simultaneously). In this case, there are three options.

As the first option, when the repeater receives data from all of the plurality of communication apparatuses within a predetermined period of time, the repeater relays (transmits) the received data to another communication apparatus. Then, after transmitting all of the received data, the repeater transitions to the operation pausing mode. The operation pausing mode continues until the next timing at which the repeater transmits a polling signal.

As the second option, when the repeater receives data from some communication apparatuses, which are not all of the plurality of communication apparatuses, within the predetermined period of time, the repeater relays (transmits) only the received data to another communication apparatus. Then, after transmitting only the received data, the repeater transition to the operation pausing mode. The operation pausing mode continues until the next timing at which the repeater transmits a polling signal. Note that, when data is received from some communication apparatuses, which are not all of the plurality of communication apparatuses, the changing of the mode to the operation pausing mode need not be executed, and the repeater may remain in the steady mode. This is because the power of the repeater can be saved even only by changing the mode to the operation pausing mode after receiving data from all of the plurality of communication apparatuses.

As the third option, when the repeater receives no data from all of the plurality of communication apparatuses within the predetermined period of time, the repeater transitions to the operation pausing mode after the predetermined period of time elapses. The operation pausing mode continues until the next timing at which the repeater transmits a polling signal. Note that when no data is received from all of the plurality of communication apparatuses, the changing of the mode to the operation pausing mode need not be performed, and the repeater may remain in the steady mode. This is because the power of the repeater can be saved even only by changing the mode to the operation pausing mode after receiving data from all of the plurality of communication apparatuses.

The repeater stores (that is, knows) the network topology of radio communication system 2 in storage apparatus 32 of the repeater in some cases, and does not store (that is, does not know) the network topology in other cases. The network topology represents the connection relationship, the hierarchy, and the like between the terminal, the repeater, and the base station in radio communication system 2.

### <Operation of Base Station>

When the base station receives data from the repeater, the base station transmits data to the target terminal via one or more repeaters depending on the purpose (in detail, see Embodiment 2 of the present disclosure), or transmits data to the cloud for processing and analyzing so-called big data.

The base station stores (that is, knows) the network topology of radio communication system 2 in storage apparatus 32 of the base station in some cases, and does not store (that is, does not know) the network topology in other cases. The network topology represents the connection relationship, the hierarchy, and the like between the terminal, the repeater, and the base station in radio communication system 2.

### <First Example of Data Communication Between Terminal and Repeater>

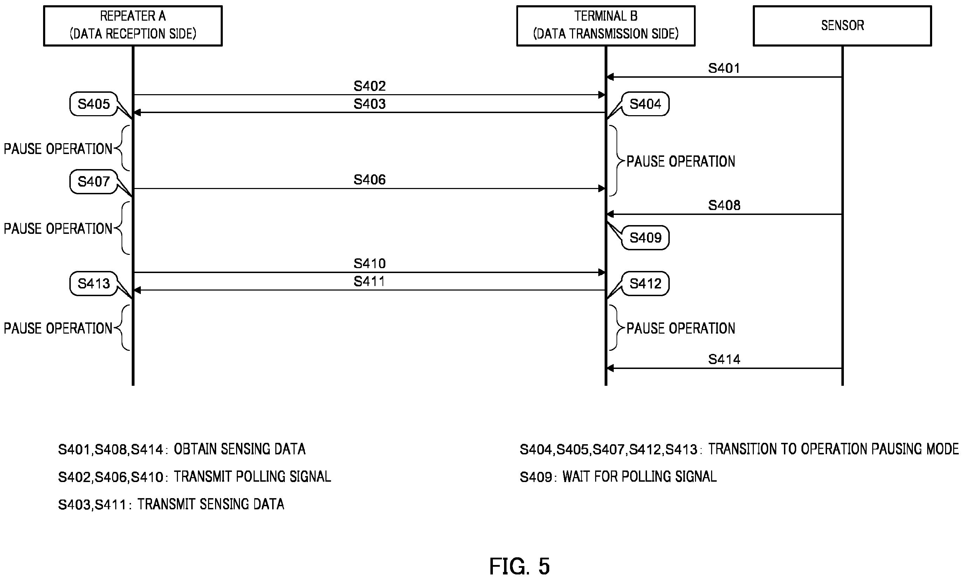

Next, the first example of the data communication between the terminal and the repeater in radio communication system 2 will be described with reference to FIG. 5. FIG. 5 is a sequence diagram for describing the first example of the data communication between the terminal and the repeater in radio communication system 2 according to Embodiment 1 of the present disclosure.

Repeater A illustrated in FIG. 5 may be, for example, repeater A-6 illustrated in FIG. 3, and terminal B illustrated in FIG. 5 may be, for example, terminal B-1 illustrated in FIG. 3.

In step S401, the sensor connected to terminal B obtains sensing data such as temperature, and transmits the sensing data to terminal B. That is, terminal B obtains sensing data from the sensor.

In step S402, repeater A transmits a polling signal to terminal B.

Terminal B includes sensing data, thereby transmitting the sensing data to repeater A, and repeater A receives the sensing data from terminal B within a predetermined period of time after transmitting the polling signal in step S403.

After transmitting the sensing data to repeater A, terminal B transitions from the steady mode to the operation pausing mode in step S404. The operation pausing mode continues until the next sensing timing.

After receiving the sensing data from terminal B, in step S405, repeater A appropriately relays the sensing data to another repeater (e.g., repeater A-4 in FIG. 3) or the base station, which are higher-level communication apparatuses for repeater A , and transitions from the steady mode to the operation pausing mode. The operation pausing mode continues until the next timing at which repeater A transmits a polling signal. Therefore, after at least transmitting the polling signal to terminal B, repeater A transitions from the steady mode to the operation pausing mode within the polling interval.

Repeater A transitions to the steady mode at the next timing of transmitting a polling signal, and transmits a polling signal to terminal B again while terminal B is in the operation pausing mode in step S406. Thus, terminal B does not respond to the polling signal, and transmits no sensing data to repeater A.

When repeater A receives no sensing data from terminal B within the predetermined period of time after transmitting the polling signal, repeater A transitions to the operation pausing mode after the predetermined period of time elapses in step S407. Therefore, repeater A transitions from the steady mode to the operation pausing mode even when receiving no sensing data from terminal B. The operation pausing mode continues until the next timing at which repeater A transmits a polling signal. Note that the transition in step S407 need not be performed, and repeater A may remain in the steady mode.

Terminal B transitions to the steady mode at the next sensing timing, and in step S408, the sensor obtains sensing data such as temperature and transmits the sensing data to terminal B. That is, terminal B obtains sensing data from the sensor.

Terminal B does not transition to the operation pausing mode while including sensing data, and waits for a polling signal from repeater A in step S409.

Repeater A transitions to the steady mode at the next timing of transmitting a polling signal, and transmits a polling signal to terminal B again in step S410.

Terminal B includes sensing data, thereby transmitting the sensing data to repeater A, and repeater A receives the sensing data from terminal B within the predetermined period of time after transmitting the polling signal in step S411.

After transmitting the sensing data to repeater A, terminal B transitions to the operation pausing mode in step S412. The operation pausing mode continues until the next sensing timing.

After receiving the sensing data from terminal B, in step S413, repeater A appropriately relays the sensing data to another repeater or the base station, and transitions to the operation pausing mode. The operation pausing mode continues until the next timing at which repeater A transmits a polling signal.

Thereafter, the same processing is repeated. For example, terminal B transitions to the steady mode at the next sensing timing, and in step S414, the sensor obtains sensing data such as temperature and transmits the sensing data to terminal B. That is, terminal B obtains sensing data from the sensor.

In the first example, in a case where a communication error occurs when repeater A transmits a polling signal to terminal B, repeater A may operate on the assumption that terminal B includes no sensing data, and terminal B may operate on the assumption that repeater A transmits no polling signal to terminal B.

In the first example, in a case where a communication error occurs when terminal B transmits sensing data to repeater A, repeater A may operate on the assumption that terminal B includes no sensing data, and terminal B may operate on the assumption that the sensing data has been transmitted to repeater A. Therefore, one piece of sensing data is lost in this case, but radio communication system 2 may continue the operation, accepting small amount of data loss.

In the first example, a plurality of pieces of sensing data possibly remains in storage apparatus 32 of the terminal. In this case, as described above, when receiving a polling signal from the repeater, the terminal may transmit all of the plurality of pieces of sensing data to the repeater, may transmit only the newest sensing data among the plurality of pieces of sensing data to the repeater, or may transmit a predetermined number of pieces of sending data in the newest order among the plurality of pieces of sensing data to the repeater.

### <Second Example of Data Communication Between Terminal and Repeater>

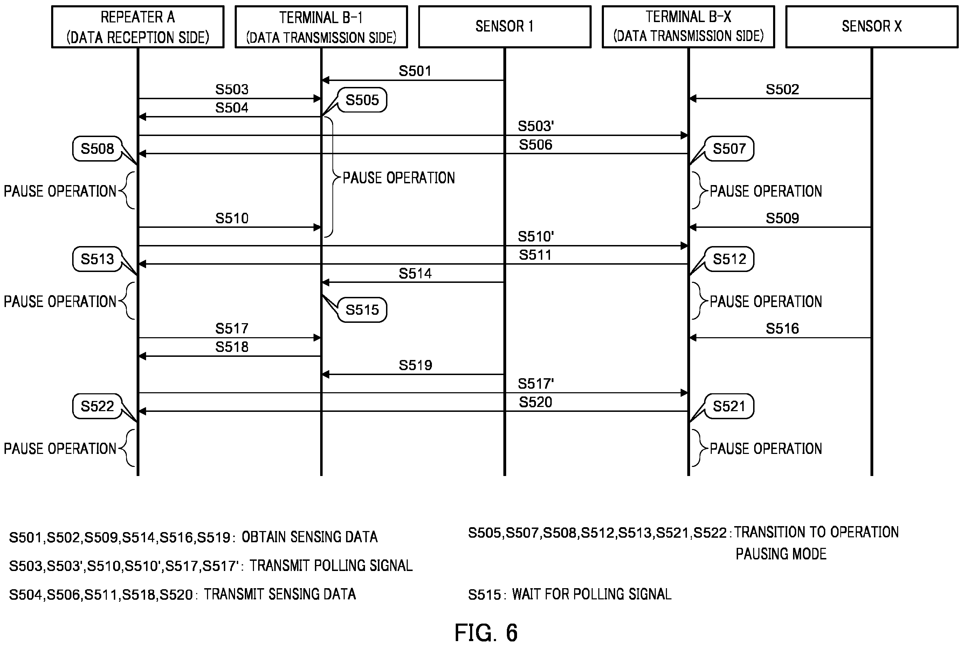

Next, the second example of the data communication between the terminal and the repeater in radio communication system 2 will be described with reference to FIG. 6. FIG. 6 is a sequence diagram for describing the second example of the data communication between the terminal and the repeater in radio communication system 2 according to Embodiment 1 of the present disclosure.

Repeater A illustrated in FIG. 6 may be, for example, repeater A-6 illustrated in FIG. 3, and terminal B-1 illustrated in FIG. 6 may be, for example, terminal B-1 illustrated in FIG. 3, terminal B-X (X is an integer of 2 or more) illustrated in FIG. 6 may be, for example, terminal B-2 illustrated in FIG. 3 or a terminal not illustrated in FIG. 3. In this case, each of terminals B-1 to B-X can operate in the same manner as the terminal described in the example illustrated in above-described FIG. 5, and repeater A can operate in the same manner as the repeater described in the example illustrated in above-described FIG. 5.

In step S501, sensor 1 connected to terminal B-1 obtains sensing data such as temperature, and transmits the sensing data to terminal B-1. That is, terminal B-1 obtains sensing data from sensor 1.

In step S502, sensor X connected to terminal B-X obtains sensing data such as temperature, and transmits the sensing data to terminal B-X. That is, terminal B-X obtains sensing data from sensor-X.

In step S503, repeater A transmits a polling signal to terminal B-1. In step S503', repeater A transmits a polling signal to terminal B-X. These polling signals may be transmitted to a plurality of terminals simultaneously (e.g., by broadcast) or sequentially (e.g., approximately simultaneously). In a case where repeater A sequentially transmits a polling signal, when repeater A transmits polling signals to terminal B-1 to terminal B-X in a shorter period of time, repeater A can pause the operation for a longer time.

Terminal B-1 includes sensing data, thereby transmitting the sensing data to repeater A, and repeater A receives the sensing data from terminal B-1 within a predetermined period of time after transmitting the polling signal in step S504.

After transmitting sensing data to repeater A, terminal B-1 transitions to the operation pausing mode in step S505. The operation pausing mode continues until the next sensing timing.

Terminal B-X includes sensing data, thereby transmitting the sensing data to repeater A, and repeater A receives the sensing data from terminal B-X within the predetermined period of time after transmitting the polling signal in step S506.

After transmitting the sensing data to repeater A, terminal B-X transitions to the operation pausing mode in step S507. The operation pausing mode continues until the next sensing timing.

After receiving the sensing data from terminal B-1 and terminal B-X, in step S508, repeater A appropriately relays the sensing data to another repeater (e.g., repeater A-4 in FIG. 2) or the base station, which are the higher-level communication apparatuses for repeater A, and transitions to the operation pausing mode. The operation pausing mode continues until the next timing at which repeater A transmits a polling signal.

Terminal B-X transitions to the steady mode at the next sensing timing, and in step S509, sensor-X obtains sensing data such as temperature, and transmits the sensing data to terminal B-X. That is, terminal B-X obtains sensing data from sensor-X.

Repeater A transitions to the steady mode at the next timing of transmitting a polling signal, and transmits a polling signal to terminal B-1 again while terminal B-1 is in the operation pausing mode in step S510. Thus, terminal B-1 does not respond to the polling signal, and repeater A does not receive the sensing data from terminal B-1 within the predetermined period of time after transmitting the polling signal. In step S510', repeater A transmits a polling signal to terminal B-X. These polling signals may be transmitted to a plurality of terminals simultaneously (e.g., by broadcast) or sequentially (or approximately simultaneously).

Terminal B-X includes sensing data, thereby transmitting the sensing data to repeater A, and repeater A receives the sensing data from terminal B-X within the predetermined period of time after transmitting the polling signal in step S511.

After transmitting the sensing data to repeater A, terminal B-X transitions to the operation pausing mode in step S512. The operation pausing mode continues until the next sensing timing.

Repeater A does not receive the sensing data from terminal B-1, but has received the sensing data from terminal B-X. Thus, repeater A then appropriately relays the sensing data to another repeater or the base station, and transitions to the operation pausing mode in step S513. The operation pausing mode continues until the next timing at which repeater A transmits a polling signal.

Terminal B-1 transitions to the steady mode at the next sensing timing, and in step S514, sensor 1 obtains sensing data such as temperature and transmits the sensing data to terminal B-1. That is, terminal B-1 obtains sensing data from sensor 1.

Terminal B-1 does not transition to the operation pausing mode while including the sensing data, and waits for a polling signal from repeater A in step S515.

Terminal B-X transitions to the steady mode at the next sensing timing, and in step S516, sensor-X obtains sensing data such as temperature, and transmits the sensing data to terminal B-X. That is, terminal B-X obtains sensing data from sensor-X.

Repeater A transitions to the steady mode at the next timing of transmitting a polling signal, and transmits a polling signal to terminal B-1 again in step S517. In step S517', repeater A transmits a polling signal to terminal B-X again. These polling signals may be transmitted to a plurality of terminals simultaneously (e.g., by broadcast) or sequentially (or approximately simultaneously).

Terminal B-1 includes sensing data, thereby transmitting the sensing data to repeater A, and repeater A receives the sensing data from terminal B-1 within a predetermined period of time after transmitting the polling signal in step S518.

Because the next sensing time has come after terminal B-1 transmits the sensing data to repeater A, sensor 1 obtains sensing data such as temperature and transmits the data to terminal B-1 in step S519 without terminal B-1 changing its mode to the operation pausing mode. That is, terminal B-1 obtains sensing data from the sensor. Then, terminal B-1 does not transition to the operation pausing mode while including sensing data, and waits for a polling signal from repeater A.

Terminal B-X includes sensing data, thereby transmitting the sensing data to repeater A, and repeater A receives the sensing data from terminal B-X within the predetermined period of time after transmitting the polling signal in step S520.

After transmitting the sensing data to repeater A, terminal B-X transitions to the operation pausing mode in step S521. The operation pausing mode continues until the next sensing timing.

After receiving the sensing data from terminal B-1 and terminal B-X, in step S522, repeater A appropriately relays the sensing data to another repeater or the base station, and transitions to the operation pausing mode. The operation pausing mode continues until the next timing at which repeater A transmits a polling signal.

Thereafter, the same processing is repeated.

In the second example, when two or more terminals among the plurality of terminals B-1 to B-X transmit sensing data to repeater A in response to the polling signals from repeater A, these signals possibly collide with each other. To avoid such a collision, CDMA (code division multiple access scheme), FDMA (frequency division multiple access scheme), TDMA (time division multiple access scheme), and/or the like may be used.

### <Third Example of Data Communication Between Terminal and Repeater>

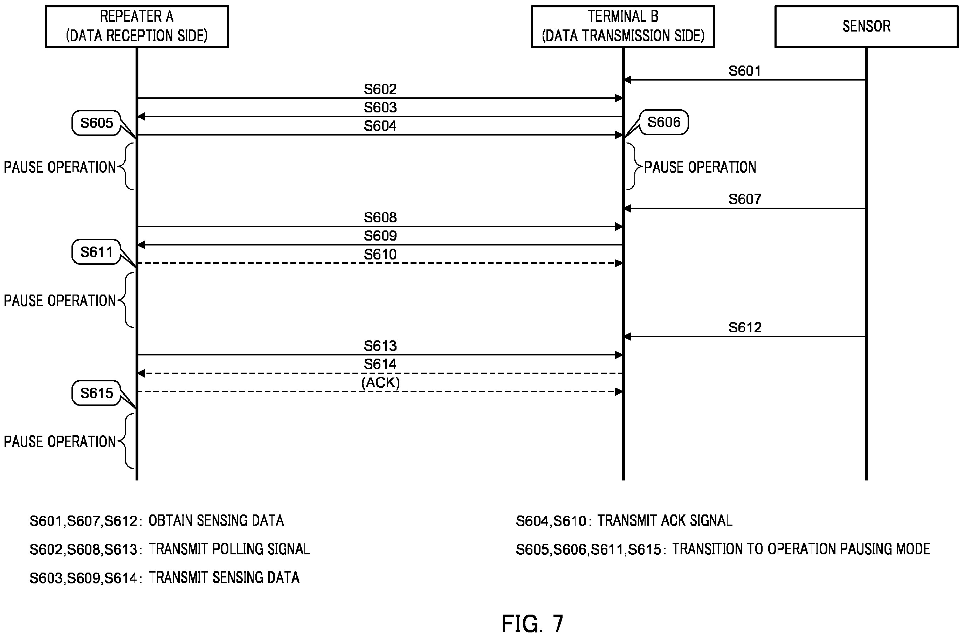

Next, the third example of the data communication between the terminal and the repeater in radio communication system 2 will be described with reference to FIG. 7. FIG. 7 is a sequence diagram for describing the third example of the data communication between the terminal and the repeater in radio communication system 2 according to Embodiment 1 of the present disclosure. In the third example, it is assumed that, in response to the transmission of the data from terminal B, repeater A transmits an ACK signal indicating that the data from terminal B has reached repeater A, and terminal B does not retransmit the data when receiving no ACK signal.

Repeater A illustrated in FIG. 7 may be, for example, repeater A-6 illustrated in FIG. 3, and terminal B illustrated in FIG. 7 may be, for example, terminal B-1 illustrated in FIG. 3. In this case, terminal B can operate in the same manner as the terminal described in the example illustrated in above-described FIGS. 5 and 6, and repeater A can operate in the same manner as the repeater described in the example illustrated in above-described FIGS. 5 and 6.

In step S601, the sensor connected to terminal B obtains sensing data such as temperature, and transmits the sensing data to terminal B. That is, terminal B obtains sensing data from the sensor.

In step S602, repeater A transmits a polling signal to terminal B.

Terminal B includes sensing data, thereby transmitting the sensing data to repeater A, and repeater A receives the sensing data from terminal B within a predetermined period of time after transmitting the polling signal in step S603.

After receiving the sensing data from terminal B, repeater A transmits an ACK signal to terminal B in step S604, and appropriately relays the sensing data to another repeater (e.g., repeater A-4 in FIG. 3) or the base station, which are higher-level communication apparatuses for repeater A. Then, in step S605, repeater A transitions to the operation pausing mode. The operation pausing mode continues until the next timing at which repeater A transmits a polling signal.

When terminal B receives the ACK signal transmitted by repeater A in step S604 within a predetermined period of time (e.g., three seconds) after transmitting the sensing data, terminal B transitions to the operation pausing mode after receiving the ACK signal in step S606 . The operation pausing mode continues until the next sensing timing.

Terminal B transitions to the steady mode at the next sensing timing, and in step S607, the sensor obtains sensing data such as temperature and transmits the sensing data to terminal B. That is, terminal B obtains sensing data from the sensor.

Repeater A transitions to the steady mode at the next timing of transmitting a polling signal, and transmits a polling signal to terminal B again in step S608.

Terminal B includes sensing data, thereby transmitting the sensing data to repeater A, and repeater A receives the sensing data from terminal B within the predetermined period of time after transmitting the polling signal in step S609.

After receiving the sensing data from terminal B, repeater A transmits an ACK signal to terminal B in step S610, and appropriately relays the sensing data to another repeater or the base station, which are higher-level communication apparatuses for repeater A. Then, in step S611, repeater A transitions to the operation pausing mode. The operation pausing mode continues until the next timing at which repeater A transmits a polling signal. It is herein assumed that the ACK signal did not reach terminal B because a communication error has occurred in step S610.

When terminal B fails to receive the ACK signal transmitted by repeater A within the predetermined period of time after transmitting the sensing data in step S610 (due to a communication error), terminal B does not transition to the operation pausing mode and remains in the steady mode. When a communication error occurs when repeater A transmits an ACK signal to terminal B, repeater A may operate on the assumption that terminal B has received the ACK signal, and terminal B may operate on the assumption that repeater A has transmitted no ACK signal to terminal B.

In step S612, the sensor obtains sensing data such as temperature, and transmits the sensing data to terminal B. That is, terminal B obtains sensing data from the sensor.

Repeater A transitions to the steady mode at the next timing of transmitting a polling signal, and transmits a polling signal to terminal B again in step S613.

Terminal B includes sensing data, thereby transmitting the sensing data to repeater A in step S614. It is herein assumed that the sensing data did not reach repeater A because a communication error has occurred in step S614.

When repeater A receives no sensing data from terminal B (because of a communication error) within the predetermined period of time after transmitting the polling signal, repeater A transitions to the operation pausing mode after the predetermined period of time elapses in step S615. The operation pausing mode continues until the next timing at which repeater A transmits a polling signal. Note that the transition in step S615 need not be performed, and repeater A may remain in the steady mode. Repeater A receives no sensing data from terminal B within the predetermined period of time after transmitting the polling signal, thereby transmitting no ACK signal to terminal B. In this case, repeater A operates by considering that terminal B includes no sensing data, and terminal B operates on the assumption that the sensing data has been transmitted to repeater A. Therefore, one piece of sensing data is lost in this case, but radio communication system 2 may continue the operation, accepting small amount of data loss.

Thereafter, the same processing is repeated.

### <Fourth Example of Data Communication Between Terminal and Repeater>

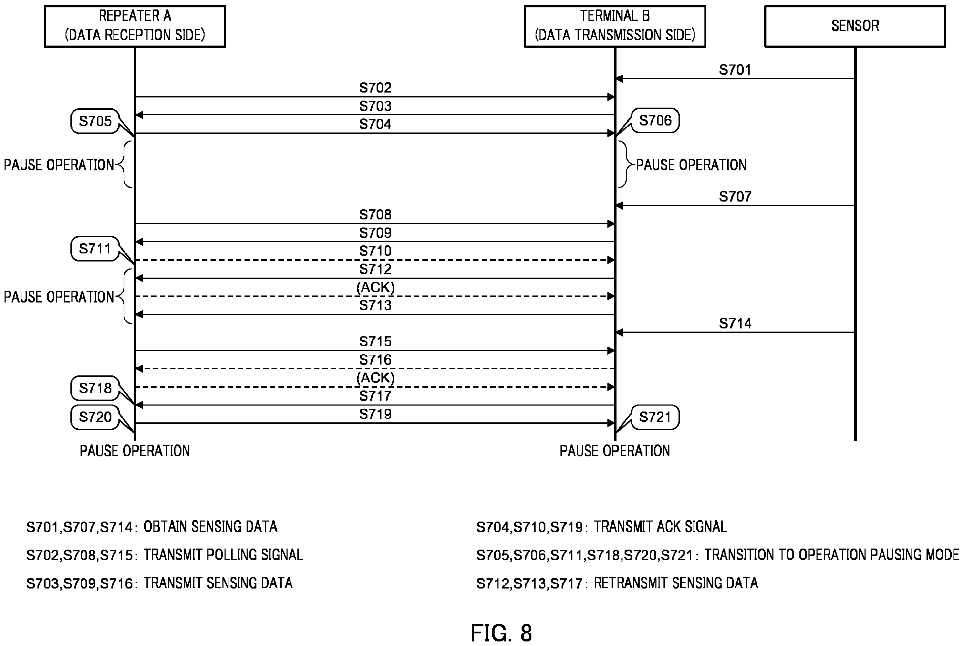

Next, the fourth example of the data communication between the terminal and the repeater in radio communication system 2 will be described with reference to FIG. 8. FIG. 8 is a sequence diagram for describing the fourth example of the data communication between the terminal and the repeater in radio communication system 2 according to Embodiment 1 of the present disclosure. In the fourth example, in response to the transmission of the data from terminal B, repeater A transmits an ACK signal indicating that the data from terminal B has reached repeater A, and terminal B retransmits the data when receiving no ACK signal.

Repeater A illustrated in FIG. 8 may be, for example, repeater A-6 illustrated in FIG. 3, and terminal B illustrated in FIG. 8 may be, for example, terminal B-1 illustrated in FIG. 3. In this case, terminal B can operate in the same manner as the terminal described in the example illustrated in above-described FIGS. 5 to 7, and repeater A can operate in the same manner as the repeater described in the example illustrated in above-described FIGS. 5 to 7.

In step S701, the sensor connected to terminal B obtains sensing data such as temperature, and transmits the sensing data to terminal B. That is, terminal B obtains sensing data from the sensor.

In step S702, repeater A transmits a polling signal to terminal B.

Terminal B includes sensing data, thereby transmitting the sensing data to repeater A, and repeater A receives the sensing data from terminal B in step S703.

After receiving the sensing data from terminal B, repeater A transmits an ACK signal to terminal B in step S704, and appropriately relays the sensing data to another repeater (e.g., repeater A-4 in FIG. 3) or the base station, which are higher-level communication apparatuses for repeater A. Then, in step S705, repeater A transitions to the operation pausing mode. The operation pausing mode continues until the next timing at which repeater A transmits a polling signal.

When terminal B receives the ACK signal transmitted by repeater A in step S704 within a predetermined period of time after transmitting the sensing data, terminal B transitions to the operation pausing mode in step S706 after receiving the ACK signal. The operation pausing mode continues until the next sensing timing.

Terminal B transitions to the steady mode at the next sensing timing, and in step S707, the sensor obtains sensing data such as temperature and transmits the sensing data to terminal B. That is, terminal B obtains sensing data from the sensor.

Repeater A transitions to the steady mode at the next timing of transmitting a polling signal, and in step S708, repeater A transmits a polling signal to terminal B again.

Terminal B includes sensing data, thereby transmitting the sensing data to repeater A, and repeater A receives the sensing data from terminal B in step S709.

After receiving the sensing data from terminal B, repeater A transmits an ACK signal to terminal B in step S710, and appropriately relays the sensing data to another repeater or the base station, which are higher-level communication apparatuses for repeater A. Then, in step S711, repeater A transitions to the operation pausing mode. The operation pausing mode continues until the next timing at which repeater A transmits a polling signal. It is herein assumed that the ACK signal did not reach terminal B because a communication error has occurred in step S710.

When terminal B fails to receive the ACK signal transmitted by repeater A within the predetermined period of time after transmitting the sensing data in step S710 (due to a communication error), terminal B retransmits the sensing data to repeater A in step S712. In this case, repeater A does not receive the sensing data because repeater A is in the operation pausing mode, thereby transmitting no ACK signal to terminal B.

Thus, because terminal B receives no ACK signal within the predetermined period of time after retransmitting the sensing data, terminal B repeatedly retransmits the sensing data to repeater A in step S713.

The retransmission of the sensing data by terminal B may be repeated indefinitely until terminal B receives an ACK signal from repeater A, or may be repeated until the number of retransmissions reaches a predetermined upper limit.

In step S714, the sensor obtains sensing data such as temperature, and transmits the sensing data to terminal B. That is, terminal B obtains sensing data from the sensor.

Repeater A transitions to the steady mode at the next timing of transmitting a polling signal, and transmits a polling signal to terminal B again in step S715.

Terminal B includes sensing data, thereby transmitting the sensing data to repeater A in step S716. It is herein assumed that the sensing data did not reach repeater A because a communication error has occurred in step S716.

When repeater A does not receive the sensing data from terminal B (because of a communication error), repeater A does not transition to the operation pausing mode, remains in the steady mode, and waits for the next transmission of the polling signal. In this case, repeater A may transition to the operation pausing mode.

Repeater A receives no sensing data, thereby transmitting no ACK signal to terminal B.

Thus, because terminal B receives no ACK signal within the predetermined period of time after retransmitting the sensing data, terminal B retransmits the sensing data to repeater A in step S717.

Repeater A can receive the retransmitted sensing data in step S718 while waiting for the next transmission of a polling signal.

After receiving the sensing data from terminal B, repeater A transmits an ACK signal to terminal B in step S719, and appropriately relays the sensing data to another repeater or the base station, which are higher-level communication apparatuses for repeater A. Then, in step S720, repeater A transitions to the operation pausing mode. The operation pausing mode continues until the next timing at which repeater A transmits a polling signal.

When terminal B receives the ACK signal transmitted by repeater A in step S720 within the predetermined period of time after retransmitting the sensing data, terminal B transitions to the operation pausing mode after receiving the ACK signal in step S721. The operation pausing mode continues until the next sensing timing.

Thereafter, the same processing is repeated.

In the fourth example, when terminal B obtains the next sensing data while the ACK signal from repeater A does not reach terminal B and terminal B retransmits sensing data for one or more times, terminal B may stop retransmitting the sensing data. At this time, terminal B may delete the sensing data from storage apparatus 32.

In the fourth example, repeater A transmits an ACK signal in response to the transmission of data from terminal B, and terminal B retransmits the data when receiving no ACK signal; therefore, the probability to lose data can be reduced.

### <Fifth Example of Data Communication Between Terminal and Repeater>

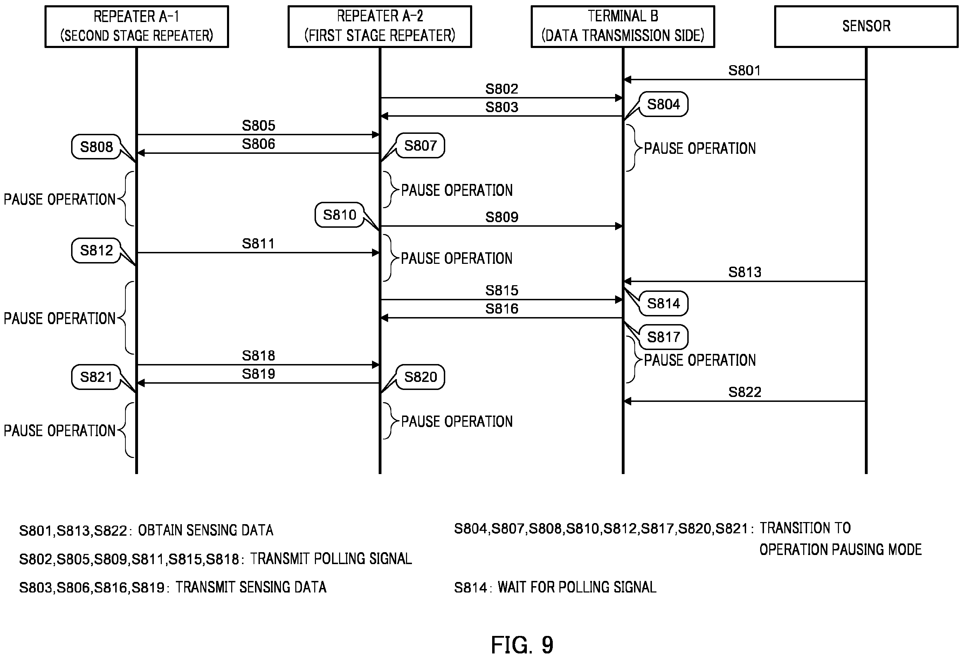

Next, the fifth example of the data communication between the terminal and the repeater in radio communication system 2 will be described with reference to FIG. 9. FIG. 9 is a sequence diagram for describing the fifth example of the data communication between the terminal and the repeater in radio communication system 2 according to Embodiment 1 of the present disclosure.

Repeater A-1 illustrated in FIG. 9 may be, for example, repeater A-4 illustrated in FIG. 3, repeater A-2 illustrated in FIG. 9 may be, for example, repeater A-6 illustrated in FIG. 3, and terminal B illustrated in FIG. 9 may be, for example, terminal B-1 illustrated in FIG. 3. In this case, terminal B can operate in the same manner as the terminal described in the example illustrated in above-described FIGS. 5 to 8, and each of repeater A-1 and repeater A-2 can operate in the same manner as the repeater described in the example illustrated in above-described FIGS. 5 to 8.

In step S801, the sensor connected to terminal B obtains sensing data such as temperature, and transmits the sensing data to terminal B. That is, terminal B obtains sensing data from the sensor.

In step S802, repeater A-2 transmits a polling signal to terminal B-1.

Terminal B includes sensing data, thereby transmitting the sensing data to repeater A-2, and repeater A-2 receives the sensing data from terminal B within a predetermined period of time after transmitting the polling signal in step S803.

After transmitting the sensing data to repeater A-2, terminal B transitions to the operation pausing mode in step S804. The operation pausing mode continues until the next sensing timing.

After receiving the sensing data from terminal B, repeater A-2 does not transition to the operation pausing mode, and waits for a polling signal from repeater A-1.

In step S805, repeater A-1 transmits a polling signal to repeater A-2.

Repeater A-2 includes the sensing data received from terminal B, thereby transmitting the sensing data to repeater A-1, and repeater A-1 receives the sensing data from repeater A-2 within a predetermined period of time after transmitting the polling signal in step S806.

After transmitting the sensing data to repeater A-1, repeater A-2 transitions to the operation pausing mode in step S807. The operation pausing mode continues until the next timing at which repeater A-2 transmits a polling signal.

After receiving the sensing data from repeater A-2, in step S808, repeater A-1 appropriately relays the sensing data to another repeater (e.g., repeater A-2 in FIG. 3) or the base station, and transitions to the operation pausing mode. The operation pausing mode continues until the next timing at which repeater A-1 transmits a polling signal.

Repeater A-2 transitions to the steady mode at the next timing of transmitting a polling signal, and in step S809, repeater A-2 transmits a polling signal to terminal B again. Similarly to the above example, when terminal B is in the operation pausing mode, repeater A-2 receives no sensing data from terminal B, and when terminal B includes sensing data, repeater A-2 receives the sensing data from terminal B within the predetermined period of time after transmitting the polling signal in some cases, and does not receive the sensing data in other cases. In any case, similarly to the above example, it is assumed that repeater A-2 has transitioned to the operation pausing mode in step S810 after a predetermined period of time elapses.

Repeater A-1 transitions to the steady mode at the next timing of transmitting a polling signal, and transmits a polling signal to repeater A-2 again while repeater A-2 is in the operation pausing mode in step S811. Thus, repeater A-2 does not respond to the polling signal, and transmits no sensing data to repeater A-1.

When repeater A-1 receives no sensing data from repeater A-2 within the predetermined period of time after transmitting the polling signal, repeater A-1 transitions to the operation pausing mode after the predetermined period of time elapses in step S812. The operation pausing mode continues until the next timing at which repeater A-1 transmits a polling signal. Note that the transition in step S812 need not be performed, and repeater A-1 may remain in the steady mode.

Terminal B transitions to the steady mode at the next sensing timing, and in step S813, the sensor obtains sensing data such as temperature and transmits the sensing data to terminal B. That is, terminal B obtains sensing data from the sensor.

Terminal B does not transition to the operation pausing mode while including sensing data, and waits for a polling signal from repeater A-2 in step S814.

Repeater A-2 transitions to the steady mode at the next timing of transmitting a polling signal, and transmits a polling signal to terminal B again in step S815.

Terminal B includes sensing data, thereby transmitting the sensing data to repeater A-2, and repeater A-2 receives the sensing data from terminal B within the predetermined period of time after transmitting the polling signal in step S816.

After transmitting the sensing data to repeater A-2, terminal B transitions to the operation pausing mode in step S817. The operation pausing mode continues until the next sensing timing.

After receiving the sensing data from terminal B, repeater A-2 does not transition to the operation pausing mode, and waits for a polling signal from repeater A-1.

Repeater A-1 transitions to the steady mode at the next timing of transmitting a polling signal, and transmits a polling signal to repeater A-2 again in step S818.

Repeater A-2 includes the sensing data received from terminal B, thereby transmitting the sensing data to repeater A-1, and repeater A-1 receives the sensing data from repeater A-2 within the predetermined period of time after transmitting the polling signal in step S819.

After transmitting the sensing data to repeater A-1, repeater A-2 transitions to the operation pausing mode in step S820. The operation pausing mode continues until the next timing at which repeater A-2 transmits a polling signal.

After receiving the sensing data from repeater A-2, in step S821, repeater A-1 appropriately relays the sensing data to another repeater or the base station, and transitions to the operation pausing mode. The operation pausing mode continues until the next timing at which repeater A-1 transmits a polling signal.

Thereafter, the same processing is repeated. For example, terminal B transitions to the steady mode at the next sensing timing, and in step S822, the sensor obtains sensing data such as temperature and transmits the sensing data to terminal B. That is, terminal B obtains sensing data from the sensor.

There are two stages of repeaters in the fifth example, but there may be three or more stages of repeaters. For example, when repeater A-0 further exists in the higher level than above-described repeater A-1, repeater A-1 can operate for repeater A-0 in the same manner as repeater A-2 operating for repeater A-1. Further, in the fifth example, the base station may exist instead of repeater A-1, and the base station may operate in the same manner as repeater A-1.

### <Example of Path Selection of Data Communication Between Terminal, Repeater, and Base Station>

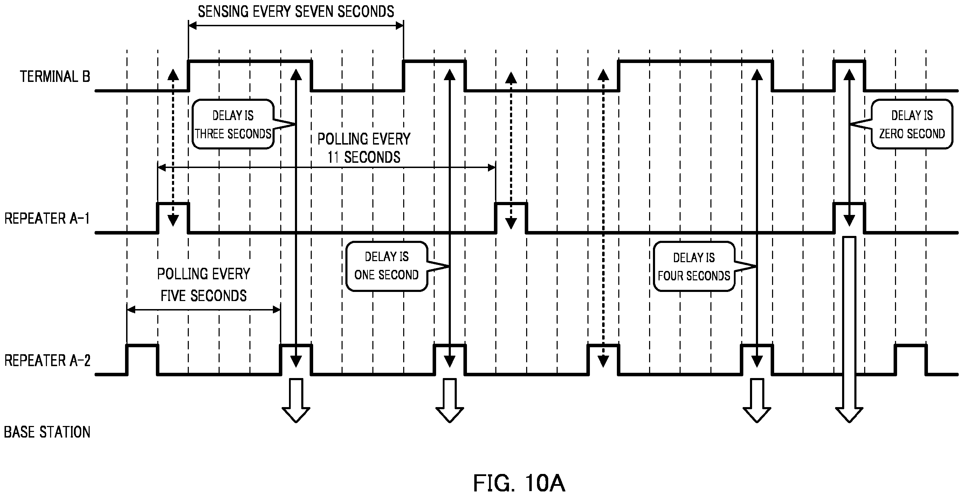

Next, exemplary path selection of the data communication between the terminal, the repeater, and the base station in radio communication system 2 will be described with reference to FIGS. 10A to 10D. FIGS. 10A to 10D illustrate exemplary path selection of the data communication between the terminal, the repeater, and the base station in radio communication system 2 according to Embodiment 1 of the present disclosure. In the example illustrated in FIG. 10A, the interval between the dotted lines represents one second. Further, in the example illustrated in FIG. 10A, the sensing by terminal B (more specifically, the sensor provided in terminal B) is performed at the timing of the rising edge in the timing diagram. Furthermore, in the example illustrated in FIG. 10A, repeater A-1 and repeater A-2 collect data at the timing of the rising edge in the timing diagram. High and Low periods of the timing diagram represent a steady mode and an operation pausing mode, respectively.

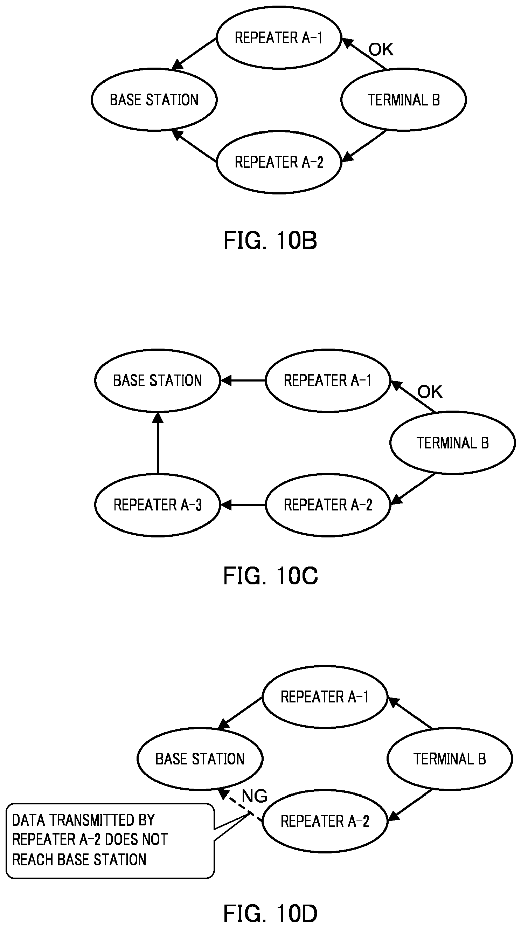

Repeater A-1 illustrated in FIGS. 10A to 10D may be, for example, repeater A-3 illustrated in FIG. 3, repeater A-2 illustrated in FIGS. 10A to 10D may be, for example, terminal A-6 illustrated in FIG. 3, and terminal B illustrated in FIGS. 10A to 10D may be, for example, terminal B-1 illustrated in FIG. 3. Further, repeater A-3 and the base station illustrated in FIG. 10C may be, for example, a repeater and a base station not illustrated in FIG. 3, respectively. In this case, terminal B can operate in the same manner as the terminal described in the example illustrated in above-described FIGS. 5 to 9, and each of repeater A-1 and repeater A-2 can operate in the same manner as the repeater described in the example illustrated in above-described FIGS. 5 to 9.

As illustrated in FIG. 10A, terminal B can be connected to both repeater A-1 and repeater A-2.

Further, as illustrated in FIG. 10A, it is assumed that the sensing interval of terminal B (a sensor connected to terminal B) is seven seconds, the polling interval of repeater A-1 is 11 seconds, and the polling interval of repeater A-2 is five seconds.

In such a situation, the connection for relaying is not specified, and terminal B can select a repeater of a transmission destination for transmitting sensing data so as to relay the data on the path where the data is likely to be relayed fastest.

For example, for the sensing data obtained first in FIG. 10A, terminal B can select repeater A-2 having a short delay as a destination of the sensing data. Further, for the sensing data obtained second in FIG. 10A, terminal B can select repeater A-2 having a short delay as a destination of the sensing data. Furthermore, for the sensing data obtained third in FIG. 10A, terminal B can select repeater A-2 having a short delay as a destination of the sensing data. In addition, for the sensing data obtained fourth in FIG. 10A, terminal B can select repeater A-1 having a short delay as a destination of the sensing data.

The above-described path (repeater) selection herein assumes that both repeater A-1 and repeater A-2 include paths that consequently lead to the base station. That is, the repeater that does not include a path to the higher-level does not transmit a polling signal to terminal B. For example, in the case illustrated in FIGS. 10B and 10C, terminal B selects a repeater of a transmission destination for transmitting sensing data from repeater A-1 and repeater A-2. On the other hand, in the case illustrated in FIG. 10D, repeater A-2 does not include a path to the base station, and thus repeater A-2 does not transmit a polling signal to terminal B, so that terminal B inevitably selects repeater A-1 as a repeater of the transmission destination for transmitting sensing data.

In the example illustrated in FIGS. 10A to 10D, terminal B can be connected to two repeaters, and it is obvious that, when a terminal can be connected to three or more repeaters, terminal B can select the repeater having the shortest delay among the three or more repeaters in the same manner as described above.

Further, it is obvious that, when the repeater can be connected to a plurality of other repeaters, the repeater can select a repeater for transmitting sensing data among the plurality of other repeaters in the same manner as the terminal.

From the viewpoint of the terminal, the above-described configuration can increase the time in which the terminal is in the operation pausing mode by transmitting data to the repeater of the transmission destination that can transmit the data fastest among the polling signals from the plurality of repeaters, and therefore, the power of the terminal can be saved.

In addition, from the viewpoint of the repeater, the polling interval of some of the repeaters may be set to be longer by the above-described configuration, and thus risks such as battery exhaustion and a radio error of such repeaters can also be avoided.

### <Further Example of Path Selection of Data Communication Between Terminal, Repeater and Base Station>

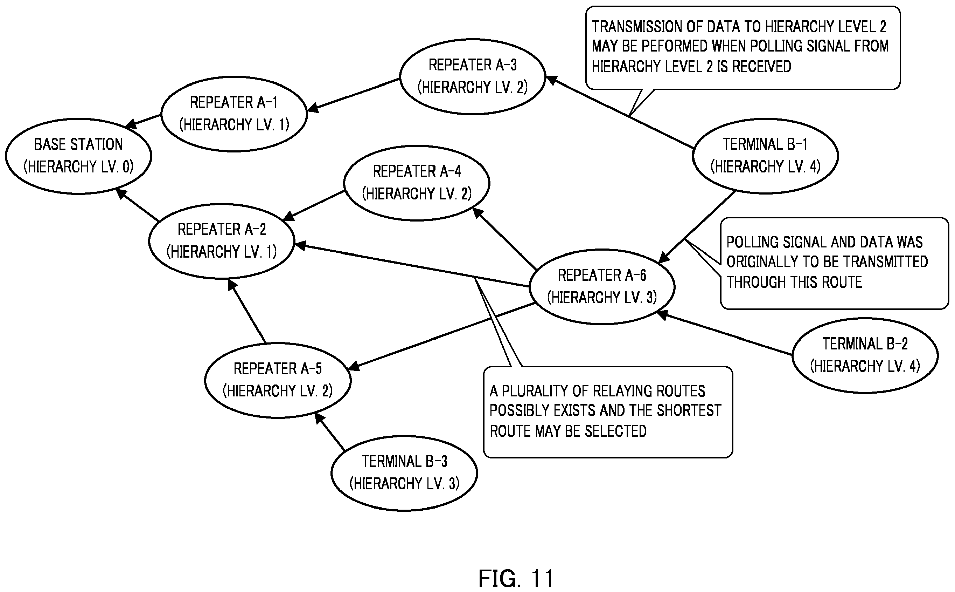

Next, with reference to FIG. 11, a further example of the path selection of the data communication between the terminal, the repeater, and the base station in radio communication system 2 will be described. FIG. 11 is a diagram for describing further exemplary path selection of the data communication between the terminal, the repeater, and the base station in radio communication system 2 according to Embodiment 1 of the present disclosure.

The terminal group, the repeater group, and the base station illustrated in FIG. 11 are the same as, for example, the terminal group, the repeater group, and the base station illustrated in FIG. 3, respectively. Each of the terminals illustrated in FIG. 11 herein may operate in the same manner as the terminal described in the examples illustrated in above-described FIGS. 5 to 10D, and each of the repeaters illustrated in FIG. 11 may operate in the same manner as the repeater described in the examples illustrated in above-described FIGS. 5 to 10D.

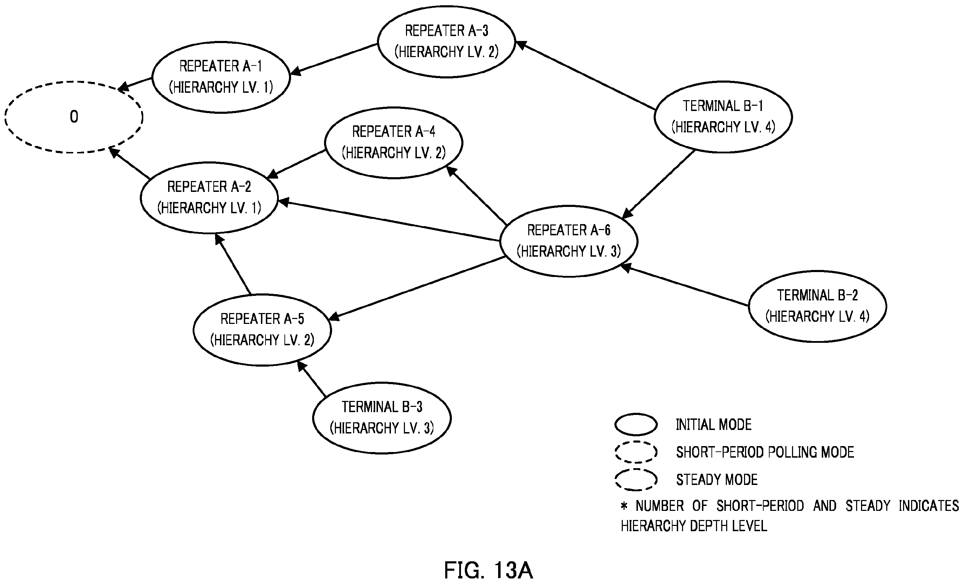

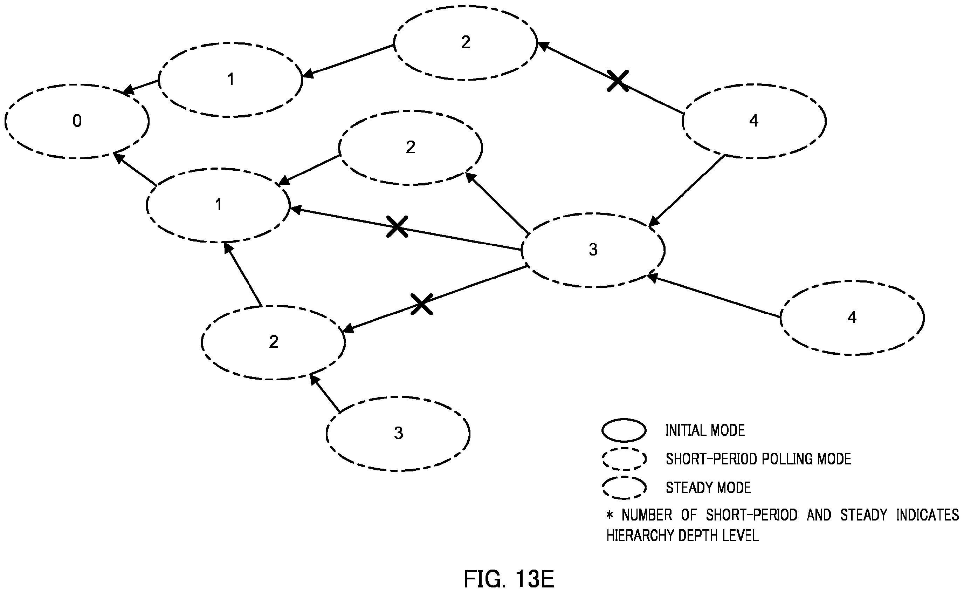

Each of the communication apparatuses illustrated in FIG. 11 may be connected to other communication apparatuses as indicated by the arrows in FIG. 11. As illustrated in FIG. 11, a hierarchy level is set for each of the communication apparatuses. It is assumed that each of the communication apparatuses knows its own hierarchy level, and the hierarchy number takes an integer of 0 or more. The hierarchy number of the communication apparatus herein represents the depth level of the hierarchy from the base station having the hierarchy number "0". Note that the hierarchy level is set when the repeater is placed, but can be initially set when the station placement is designed, and in a case where the station placement is not designed, the hierarchy level is set by causing the communication apparatus to enter an initial mode first. This will be described later with reference to FIGS. 13A and 13E.

In this example, in a case where the repeater receives a response to a polling signal from a communication apparatus in a lower hierarchy (that is, the hierarchy number indicating which hierarchy the communication apparatus is in is large), when a communication apparatus in a higher hierarchy (that is, the hierarchy number is small) exists, the repeater performs relaying to the communication apparatus in a higher hierarchy. The repeater herein transmits a polling signal to a communication apparatus in a lower hierarchy, including the hierarchy number of the repeater in the polling signal. Further, when the hierarchy number included in the polling signal is smaller than the hierarchy number of the communication apparatus, the communication apparatus that has received the polling signal transmits sensing data to the repeater in response to the polling signal.

For example, when repeater A-6 whose hierarchy number is 3 transmits a polling signal including the hierarchy number "3" to terminal B-1 whose hierarchy number is 4, the hierarchy number "3" included in the polling signal is smaller than the hierarchy number "4"of terminal B-1, so that terminal B-1 transmits sensing data to repeater A-6 in response to the polling signal. Then, when repeater A-6 receives the sensing data from terminal B-1, and repeater A-4 having the hierarchy number "2" transmits a polling signal including the hierarchy number "2" to repeater A-6, repeater A-6 transmits the sensing data to repeater A-4 in response to the polling signal because hierarchy number "2" included in the polling signal is smaller than the hierarchy number "3" of repeater A-6.

It is not that the communication apparatus that has received a polling signal can transmit sensing data only to the communication apparatus whose hierarchy number is smaller than that of the communication apparatus by one, and the communication apparatus may transmit sensing data to the communication apparatus whose hierarchy number is smaller than the communication apparatus by two or more.

For example, terminal B-1 is under repeater A-6 whose hierarchy number is 3, and is under repeater A-3 whose hierarchy number is 2. In such a situation, terminal B-1 receives a polling signal from repeater A-6 and also receives a polling signal from repeater A-3. In this case, even though transmission of the polling signal and transmission of the sensing data on the route passing through repeater A-6 are originally scheduled, terminal B-1 may transmit sensing data to repeater A-3 when receiving a polling signal from repeater A-3.

Similarly, repeater A-6 may relay the sensing data to repeater A-2 whose hierarchy number is 1, instead of repeater A-4 whose hierarchy number is 2.

There is possibly a plurality of relaying routes as described above, and in this case, when the communication apparatus knows the network topology of radio communication system 2, the communication apparatus may select the shortest route based on, for example, the number of hops to the base station, which is the final destination of the sensing data.

The route can be shortened by skipping the hierarchy as described above, however, the shortest route is not necessarily the optimum route. This is because, for example, there are situations where the radio communication quality of the shortest route is not good or the route length is reversed in the higher hierarchy. Therefore, the communication apparatus may select a route other than the shortest route in a case where such a situation is known.

In addition, in a case where the communication apparatus received a polling signal from another communication apparatus whose hierarchy number is X in the past, when the communication apparatus receives a polling signal from yet another communication apparatus whose hierarchy number is X + 1, the communication apparatus need not transmit the sensing data to yet another communication apparatus, and may wait for a polling signal from another communication apparatus. Then, when receiving a polling signal from another communication apparatus within a predetermined period of time after receiving the polling signal from yet another communication apparatus, the communication apparatus may transmit the sensing data to another communication apparatus, and when receiving no polling signal from another communication apparatus within the predetermined period of time, the communication apparatus may transmit the sensing data to yet another communication apparatus. For example, the communication apparatus can transmit the sensing data through the shortest route as described above by storing historical data (including identification information and a hierarchy number of another communication apparatus) regarding past communications with another communication apparatus in the storage apparatus and by selecting a communication apparatus of a transmission destination based on the historical data.

Further, instead of selecting another communication apparatus having a short (the shortest) delay as a transmission destination, the communication apparatus may select a communication apparatus of a transmission destination based on the communication quality (such as a radio wave condition (strength)).

Thus, the communication apparatus may determine which polling signal the communication apparatus responds to among the polling signals received from a plurality of repeaters, based on the network topology of radio communication system 2 that the communication apparatus stores in storage apparatus 32, and may select a communication apparatus of a transmission destination based on this determination.

The above-described configuration can create an optimum network topology regardless of the placement of repeaters.

### <Example of Data Communication Between Terminal, Repeater and Base Station Based on Hierarchical Structure>

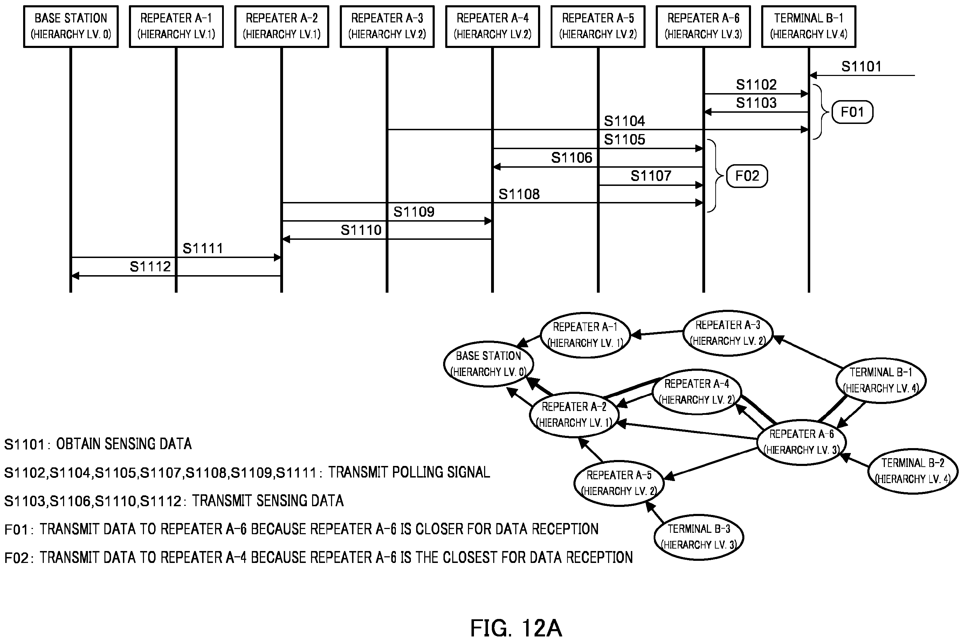

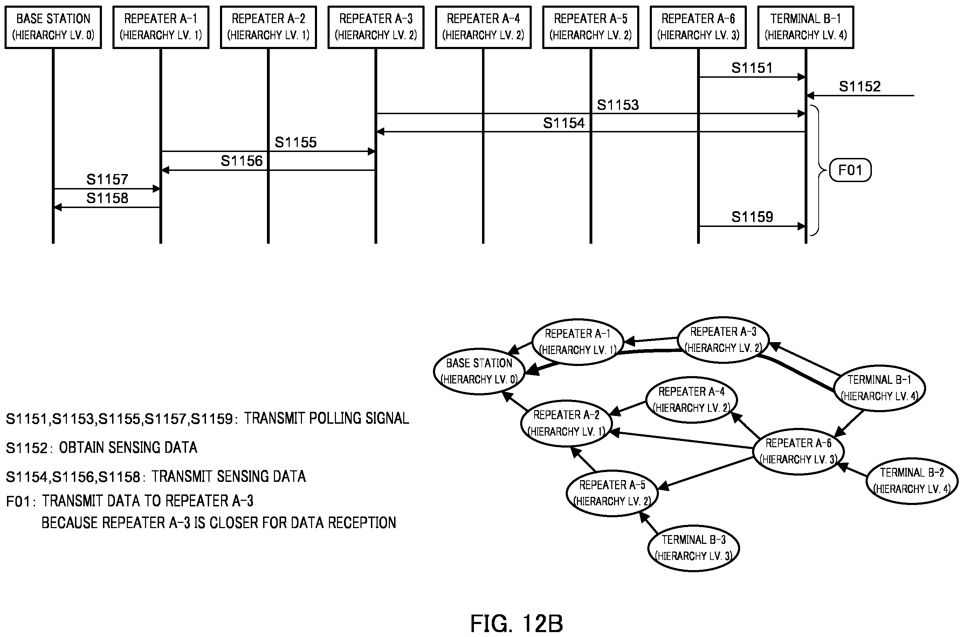

Next, exemplary data communication between the terminal, the repeater, and the base station based on the hierarchical structure in FIG. 11 will be described with reference to FIGS. 12A and 12B. FIGS. 12A and 12B are timing diagrams for describing an exemplary data communication between the terminal, the repeater, and the base station based on the hierarchical structure in FIG. 11 according to Embodiment 1 of the present disclosure. FIGS. 12 A and 12B respectively illustrate a first scenario and a second scenario in which data is relayed in different routes.

First, the first scenario will be described.

In step S1101, sensor 1 connected to terminal B-1 obtains sensing data such as temperature, and transmits the sensing data to terminal B-1. That is, terminal B-1 obtains sensing data from sensor 1.

In step S1102, repeater A-6 transmits a polling signal to terminal B-1, including the hierarchy number "3" of repeater A-6 in the polling signal.

Terminal B-1 includes sensing data, and the hierarchy number "3" included in the polling signal is smaller than the hierarchy number "4" of terminal B-1, so that terminal B-1 transmits the sensing data to repeater A-6 in step S1103.

In step S1104, repeater A-3 transmits a polling signal to terminal B-1, including the hierarchy number "2" of repeater A-3 in the polling signal. However, as described above, because terminal B-1 has already transmitted the sensing data to repeater A-6 in response to the polling signal transmitted by repeater A-6 in step S1102, terminal B-1 does not transmit sensing data to repeater A-3.

In step S1105, repeater A-4 transmits a polling signal to repeater A-6, including the hierarchy number "2" of repeater A-4 in the polling signal.

Repeater A-6 includes sensing data, and the hierarchy number "2" included in the polling signal is smaller than the hierarchy number "3" of repeater A-6, so that repeater A-6 transmits the sensing data to repeater A-4 in step S1106.

In step S1107, repeater A-5 transmits a polling signal to repeater A-6, including the hierarchy number "2" of repeater A-5 in the polling signal. In step S1108, repeater A-2 transmits a polling signal to repeater A-6, including the hierarchy number "1" of repeater A-2 in the polling signal. However, as described above, because repeater A-6 has already transmitted the sensing data to repeater A-4 in response to the polling signal transmitted by repeater A-4 in step S1105, repeater A-6 does not transmit sensing data to repeater A-5 and repeater A-2.

In step S1109, repeater A-2 transmits a polling signal to repeater A-4, including the hierarchy number "1" of repeater A-2 in the polling signal.

Repeater A-4 includes sensing data, and the hierarchy number "1" included in the polling signal is smaller than the hierarchy number "2" of repeater A-4, so that repeater A-4 transmits the sensing data to repeater A-2 in step S1110.

In step S1111, the base station transmits a polling signal to repeater A-2, including the hierarchy number "0" of the base station in the polling signal. Alternatively, when it is predetermined that a polling signal that includes no hierarchy number is a polling signal from the base station, the base station may transmit a polling signal that does not include the hierarchy number "0" to repeater A-2.

Repeater A-2 includes sensing data, and the hierarchy number "0" included in the polling signal is smaller than the hierarchy number "1" of repeater A-2 (or repeater A-2 recognizes that the polling signal that includes no hierarchy number is the polling signal from the base station), so that repeater A-2 transmits the sensing data to the base station in step S1112.

As described above, the sensing data is reported from terminal B-1 to the base station through repeater A-6, repeater A-4, and repeater A-2 in this order in the first scenario.

Next, the second scenario will be described.

In step S1151, repeater A-6 transmits a polling signal to terminal B-1, including the hierarchy number "3" of repeater A-6 in the polling signal. It is herein assumed that terminal B-1 is in the operation pausing mode. Thus, terminal B-1 does not respond to the polling signal from repeater A-6.

Terminal B-1 transitions to the steady mode, and sensor 1 connected to terminal B-1 obtains sensing data such as temperature, and transmits the sensing data to terminal B-1 in step S1152. That is, terminal B-1 obtains sensing data from sensor 1.

In step S1153, repeater A-3 transmits a polling signal to terminal B-1, including the hierarchy number "2" of repeater A-3 in the polling signal.

Terminal B-1 includes sensing data, and the hierarchy number "2" included in the polling signal is smaller than the hierarchy number "4" of terminal B-1, so that terminal B-1 transmits the sensing data to repeater A-3 in step S1154.

In step S1155, repeater A-1 transmits a polling signal to repeater A-3, including the hierarchy number "1" of repeater A-1 in the polling signal.

Repeater A-3 includes sensing data, and the hierarchy number "1" included in the polling signal is smaller than the hierarchy number "2" of repeater A-3, so that repeater A-3 transmits the sensing data to repeater A-1 in step S1156.

In step S1157, the base station transmits a polling signal to repeater A-1, including the hierarchy number "0" of the base station in the polling signal. Alternatively, when it is predetermined that the polling signal that includes no hierarchy number is a polling signal from the base station, the base station may transmit a polling signal that does not include the hierarchy number "0" to repeater A-1.

Repeater A-1 includes sensing data, and the hierarchy number "0" included in the polling signal is smaller than the hierarchy number "1" of repeater A-1 (or repeater A-1 recognizes that the polling signal that includes no hierarchy number is the polling signal from the base station), so that repeater A-1 transmits the sensing data to the base station in step S1158.

In step S1159, repeater A-6 transmits a polling signal to terminal B-1, including the hierarchy number "3" of repeater A-6 in the polling signal. However, as described above, because terminal B-1 has already transmitted the sensing data to repeater A-3 in response to the polling signal transmitted by repeater A-3 in step S1153, terminal B-1 does not transmit sensing data to repeater A-6.

As described above, the sensing data is reported from terminal B-1 to the base station through repeater A-3 and repeater A-1 in this order in the second scenario.

In the first scenario, terminal B-1 immediately transmits the sensing data to repeater A-6 whose polling signal is consequently received earlier, but terminal B-1 may wait for a polling signal from another communication apparatus for a predetermined period of time after receiving a polling signal from repeater A-6. In this case, for example, when terminal B-1 receives a polling signal from repeater A-3 within the predetermined period of time, terminal B-1 may determine to respond to the polling signal transmitted by repeater A-6 because the polling signal from repeater A-6 has been received earlier. Further, when terminal B-1 waits for a polling signal from another communication apparatus for the predetermined period of time after receiving a polling signal from repeater A-6, terminal B-1 may select repeater A-3 instead of repeater A-6 as described above because the route through repeater A-3 is the shortest route. In addition, in the first scenario, considering the radio wave condition of repeater A-6 and the radio wave condition of repeater A-3, when the radio wave of repeater A-3 is stronger, terminal B-1 may select repeater A-3 instead of repeater A-6 as described above. Note that the method of selecting transmission destination of the sensing data is similarly applicable to the repeater.

### <Example of Hierarchy Configuration of Network Constituting Radio Communication System>

Next, the example of how the hierarchy of the network constituting radio communication system 2 as described in FIGS. 11, 12A, and 12B is configured will be described with reference to FIGS. 13A to 13E. FIGS. 13A to 13E are diagrams for sequentially describing an exemplary hierarchy configuration of the network constituting radio communication system 2 according to Embodiment 1 of the present disclosure. Note that, in FIGS. 13A to 13E, a short-period polling mode and a steady mode to be described later may be abbreviated as "short-period" and "steady", respectively.

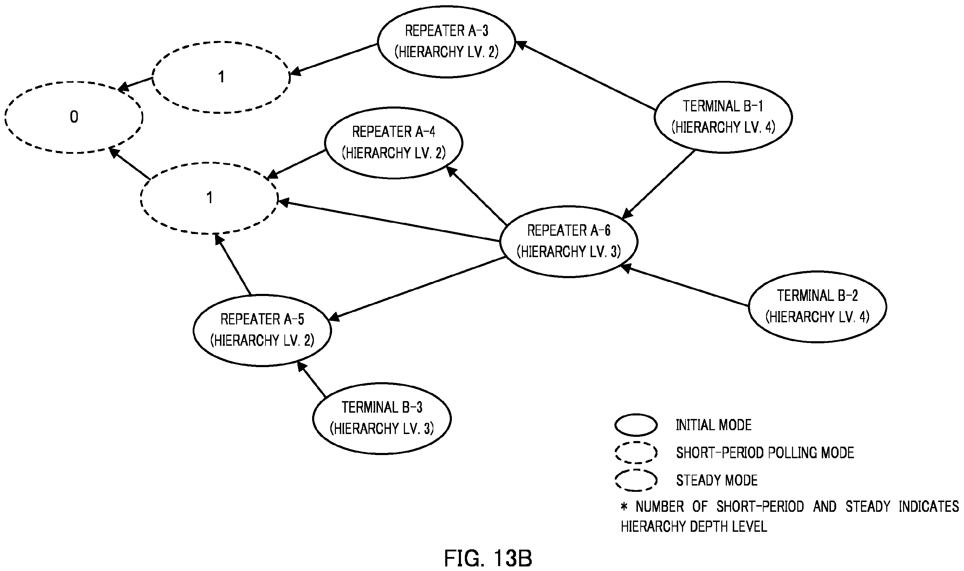

First, the base station enters a short-period polling mode, and all of the repeaters and terminals enter an initial mode. Note that, in general, the communication apparatus enters an initial mode when activated. The short-period polling mode herein means a mode of transmitting a short-period polling signal (performing broadcasting using a short-period polling signal), and the initial mode means a mode of waiting a short-period polling signal. In addition, the short-period polling signal is a signal broadcasted to configure a hierarchy of the network constituting radio communication system 2, and means a signal transmitted in a short period such as a beacon signal. The base station performs broadcasting using a short-period polling signal including the hierarchy number "0". Then, only the repeater or the terminal that has received this short-period polling signal sets its own hierarchy to "1", transitions to the short-period polling signal, and performs broadcasting using a short-period polling signal including the hierarchy number "1". This is illustrated in FIGS. 13A and 13B.

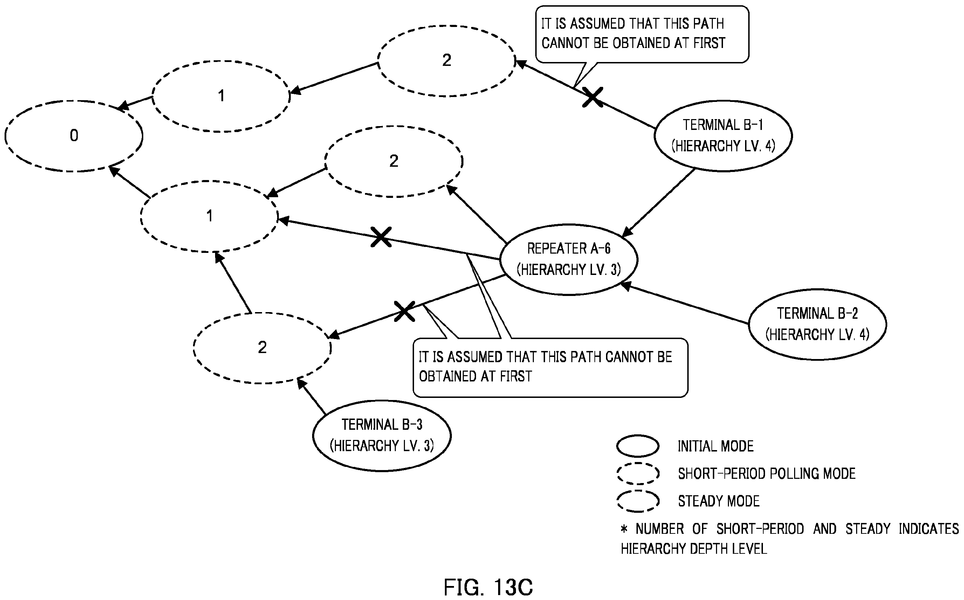

When the base station receives the short-period polling signal or a response from the repeater or the terminal, and a predetermined time (e.g., 30 seconds) elapses since transmission of the short-period polling signal, the base station transitions to the steady mode after the predetermined time elapses. That is, at least one of one or more repeaters and/or terminals always exists under the base station in the steady mode. This is illustrated in FIGS. 13B and 13C.

The repeater in the initial mode remains in the initial mode until receiving a short-period polling signal. Then, when receiving a short-period polling signal, the repeater in the initial mode sets a hierarchy number of the repeater to "the hierarchy number included in the short-period polling signal + 1", transitions to the short-period polling mode, and performs broadcasting using a short-period polling signal including the hierarchy number of the repeater. This is illustrated in FIGS. 13B to 13D.

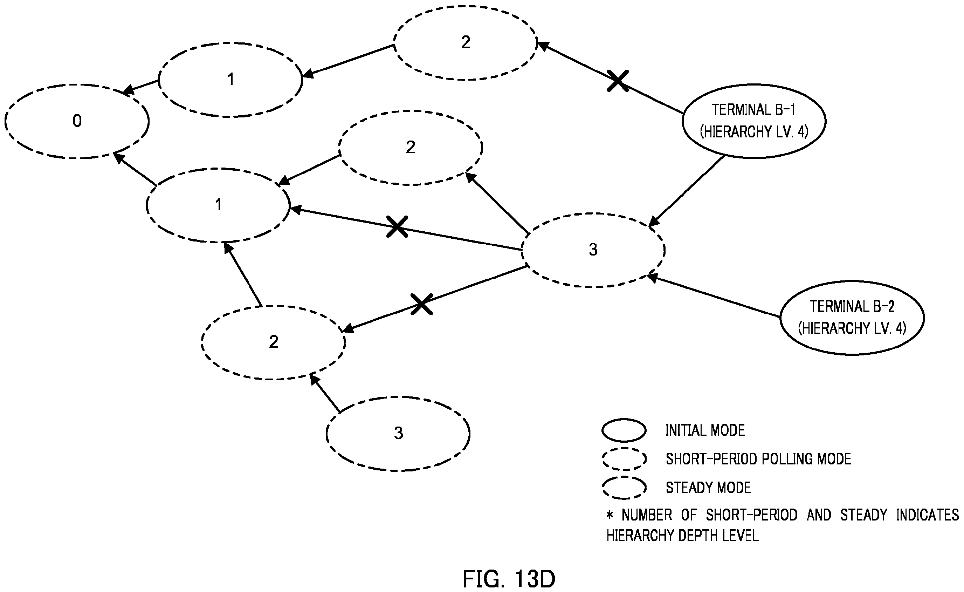

The terminal in the initial mode remains in the initial mode until receiving a short-period polling signal. Then, when receiving a short-period polling signal, the repeater in the initial mode sets a hierarchy number of the terminal to "the hierarchy number included in the short-period polling signal + 1", transmits a response indicating that the terminal has received the short-period polling signal to the base station or the repeater that has transmitted the short-period polling signal, and transitions to the steady mode. This is illustrated in FIGS. 13D and 13E.

When a predetermined time (e.g., 30 seconds) elapses since transmission of the short-period polling signal, the repeater that has transitioned to the short-period polling mode transitions to the steady mode after the predetermined time elapses, regardless of whether the repeater receives a short-period polling signal (including a hierarchy number larger than the hierarchy number of the repeater) from a repeater in a lower hierarchy or a response from the terminal. That is, at least one of one or more repeaters and/or terminals does not always exist under the repeater in the steady mode.

Then, when receiving a polling signal from the base station or the repeater in the steady mode, the repeater and the terminal that remain in the initial mode may set the hierarchy numbers of the repeater and the terminal to "the hierarchy number included in the polling signal + 1", and may transition to the steady mode.

Repetition of the above-described operation automatically sets and forms the hierarchy of the communication apparatus group consequently as illustrated in FIG. 13E.

### <Example of Flow for Configuring Hierarchy of Network Constituting Radio Communication System>

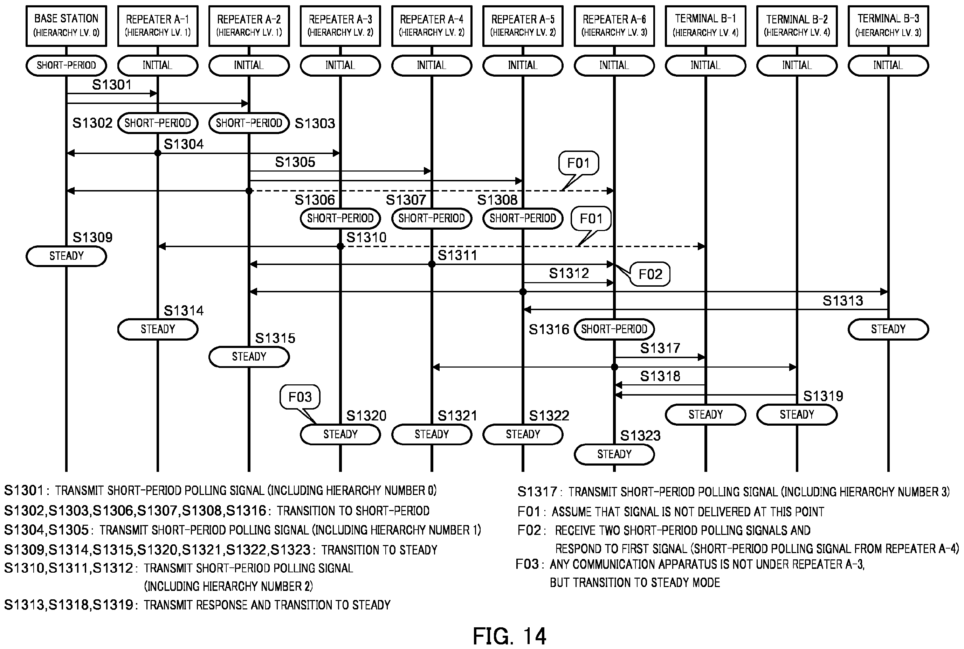

Next, an exemplary flow for configuring a hierarchy of a network constituting radio communication system 2 in FIGS. 13A to 13E will be described with reference to FIG. 14. FIG. 13 is a sequence diagram for describing a flow of configuring the hierarchy of the network constituting radio communication system 2 in FIGS. 13A to 13E according to Embodiment 1 of the present disclosure.

Note that, in FIGS. 14, an initial mode, a short-period polling mode, and a steady mode may be abbreviated as "initial", "short-period", and "steady", respectively. Further, the short-period polling signals are described to be transmitted at substantially the same timing in some parts in FIG. 14, however, in practice, the short-period polling signals are simultaneously transmitted by broadcasting.

First, as described above, the base station enters the short-period polling mode, and all of the repeaters and terminals enter the initial mode.

In step S1301, the base station performs broadcasting using a short-period polling signal including the hierarchy number "0".

Repeater A-1 and repeater A-2 that have received the short-period polling signal from the base station set the hierarchy number of repeater A-1 and repeater A-2 to "1(= 0 + 1)" in step S1302 and step S1303, respectively, and transition to the short-period polling mode. Then, repeater A-1 and repeater A-2 perform broadcasting in step S1304 and step S1305, respectively, using the short-period polling signal including the hierarchy number "1". It is herein assumed that the short-period polling signal transmitted by repeater A-2 in step S1305 does not reach repeater A-6.

Repeater A-3 that has received the short-period polling signal from repeater A-1 sets the hierarchy number of repeater A-3 to "2 (= 1 + 1)" in step S1306, and transitions to the short-period polling mode. Repeater A-3 then performs broadcasting using a short-period polling signal including the hierarchy number "2" in step S1310. It is herein assumed that the short-period polling signal transmitted by repeater A-3 in step S1310 does not reach terminal B-1.

Repeater A-4 and repeater A-5 that have received the short-period polling signal from repeater A-2 set the hierarchy numbers of repeater A-4 and repeater A-5 to "2 (= 1 + 1)" in step S1307 and step S1308, respectively, and transition to the short-period polling mode. Then, repeater A-4 and repeater A-5 performs broadcasting in step S1311 and step S1312, respectively, using a short-period polling signal including the hierarchy number "2".

When the base station receives the short-period polling signal transmitted by repeater A-1 in step S1304 and the short-period polling signal transmitted by repeater A-2 in step S1305, and a predetermined time has elapsed since the base station transmitted the short-period polling signal in step S1301, the base station transitions to the steady mode after the predetermined time elapses in step S1309.

Terminal B-3 that has received the short-period polling signal from repeater A-5 sets the hierarchy number of terminal B to "3 (= 2 + 1)" in step S1313, transmits a response indicating that terminal B-3 has received the short-period polling signal to repeater A-5, and transitions to the steady mode immediately.

Repeater A-6 that has received the short-period polling signal from repeater A-4 consequently earlier than the short-period polling signal from repeater A-5 sets the hierarchy of repeater A-6 to "3 (= 2 + 1)" in response to the short-period polling signal from repeater A-4, and transitions to the short-period polling mode in step S1316. Repeater A-6 then performs broadcasting using a short-period polling signal including the hierarchy number "3" in step S1317.

When a predetermined time elapses after repeater A-1 transmits the short-period polling signal in step S1304, repeater A-1 in the short-period polling mode transitions to the steady mode after the predetermined time elapses in step S1314. Note that repeater A-1 receives the short-period polling signal transmitted by repeater A-3 in step S1310 by the time when the predetermined time elapses after repeater A-1 transmits the short-period polling signal in step S1304.

When the predetermined time elapses after repeater A-2 transmits the short-period polling signal in step S1305, repeater A-2 in the short-period polling mode transitions to the steady mode after the predetermined time elapses in step S1315. Note that repeater A-2 receives the short-period polling signal transmitted by repeater A-4 in step S1311 and the short-period polling signal transmitted by repeater A-5 in step S1312 by the time when the predetermined elapses after repeater A-2 transmits the short-period polling signal in step S1305.

Terminal B-1 that has received the short-period polling signal from repeater A-6 sets the hierarchy number of terminal B-1 to "4 (= 3 + 1)" in step S1318, transmits the response indicating that terminal B-1 has received the short-period polling signal to repeater A-6, and transitions to the steady mode immediately.

Terminal B-2 that has received the short-period polling signal from repeater A-6 sets the hierarchy number of terminal B-2 to "4 (= 3 + 1)" in step S1319, transmits the response indicating that terminal B-2 has received the short-period polling signal to repeater A-6, and transitions to the steady mode immediately.

When the predetermined time elapses after repeater A-3 transmits the short-period polling signal in step S1310, repeater A-3 in the short-period polling mode transitions to the steady mode after the predetermined time elapses in step S1320. Note that repeater A-3 receives neither the short-period polling signal nor the response by the time when the predetermined time elapses after repeater A-3 transmits the short-period polling signal in step S1310, and no other repeaters or terminals under repeater A-3 exists.

When a predetermined time has elapsed since repeater A-4 transmitted the short-period polling signal in step S1311, repeater A-4 in the short-period polling mode transitions to the steady mode after the predetermined time elapses in step S1321. Note that repeater A-4 receives the short-period polling signal transmitted by repeater A-6 in step S1317 by the time when the predetermined time elapses after repeater A-4 transmits the short-period polling signal in step S1311.

When a predetermined time has elapsed since repeater A-5 transmitted the short-period polling signal in step S1312, repeater A-5 in the short-period polling mode transitions to the steady mode after the predetermined time elapses in step S1322. Note that repeater A-5 receives the response transmitted by terminal B-3 in step S1313 by the time when the predetermined time elapses after repeater A-5 transmits the short-period polling signal in step S1312.

When the predetermined time elapses after repeater A-6 transmits the short-period polling signal in step S1317, repeater A-6 in the short-period polling mode transitions to the steady mode after the predetermined time in step S1323. Note that repeater A-6 receives the response transmitted by terminal B-1 in step S1318 and the response transmitted by terminal B-2 in step S1319 by the time when the predetermined time elapses after repeater A-6 transmits the short-period polling signal in step S1317.

As described above, the hierarchical auto setting processing including the above-described steps automatically sets and forms the hierarchy of the communication apparatus group consequently as illustrated in FIG. 13E.

### <Example of Reconfiguring Hierarchy of Network Constituting Radio Communication System>

Next, an exemplary reconfiguration of the hierarchy of the network constituting radio communication system 2 will be described.

The hierarchy of the network constituting radio communication system 2 as illustrated in FIG. 13E may be reviewed in accordance with the change of the configuration of the network constituting radio communication system 2, and may be reconfigured by the above-described hierarchy auto-configuration processing, for example. For example, such a reconfiguration may be performed in a time period or the like when the system may not operate for a while at midnight or the like, or may be performed when batteries of some of the repeaters and/or the terminals are replaced or a repeater or a terminal is newly added. Such a reconfiguration method includes, for example, the following first to third methods, which may correspond to the above-described hierarchy auto-configuration processing.

### (First Method)

In the first method, the base station, the repeater, and the terminal are all manually reset (e.g., by an operator) to make all communication apparatuses enter the initial mode, and then the hierarchy of the network constituting radio communication system 2 are set as described with reference to FIGS. 13A to 14.

### (Second Method)

In the second method, the base station first transmits a reset polling signal, and the repeater that has received the reset polling signal relays the reset polling signal to the repeater or the terminal in a lower hierarchy in accordance with the hierarchy. After transmitting the reset polling signal a certain number of times, the base station and the repeater transition to the initial mode. The terminal transitions to the initial mode upon receiving the reset polling. Then, as described with reference to FIGS. 13A to 14, the hierarchy of the network constituting radio communication system 2 is configured.

### (Third Method)

In the third method, only some of the repeaters and terminals are reset, for example, manually or by sending a reset polling signal that specifies their IDs. Then, the repeater or terminal that has been reset and is in the initial mode transitions to the steady mode by receiving the above-described normal polling signal for confirming whether the repeater or terminal includes sensing data. Each of the repeater and the terminal includes only one communication apparatus directly in the higher level in the network topology. However, each of the repeater and the terminal can receive the above-described normal polling signal between the communication apparatuses other than the communication apparatus directly in the higher level in the network topology, and can also transmit data. Then, in response to receiving a normal polling signal from such a communication apparatus, each of the repeater and the terminal can switch which communication apparatus to be under, or can be under a plurality of communication apparatuses.

### (Example of Third method)

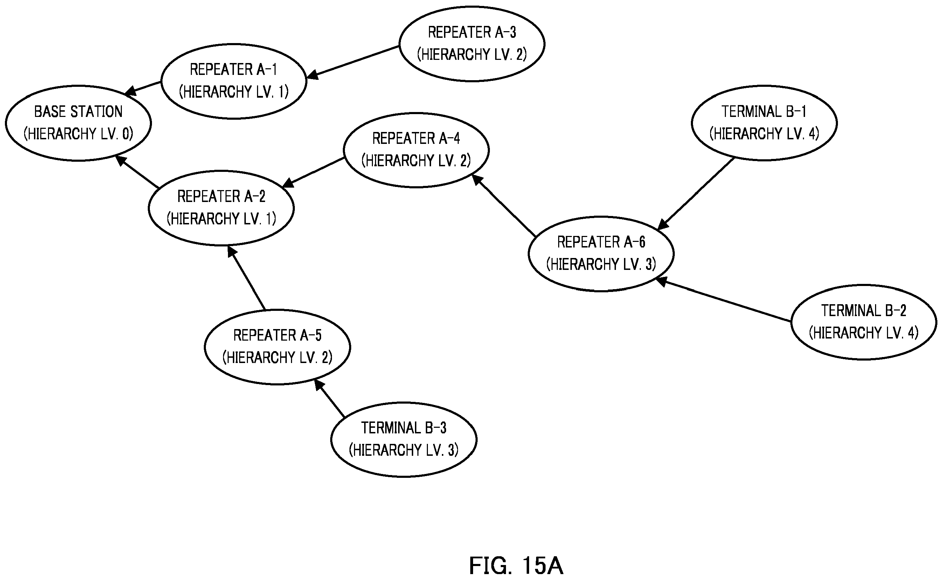

Next, an example of the above-described third method will be described with reference to FIGS. 15A to 15D. FIGS. 15A to 15D are diagrams for sequentially describing an exemplary hierarchy reconfiguration of the network constituting radio communication system 2 according to Embodiment 1 of the present disclosure.

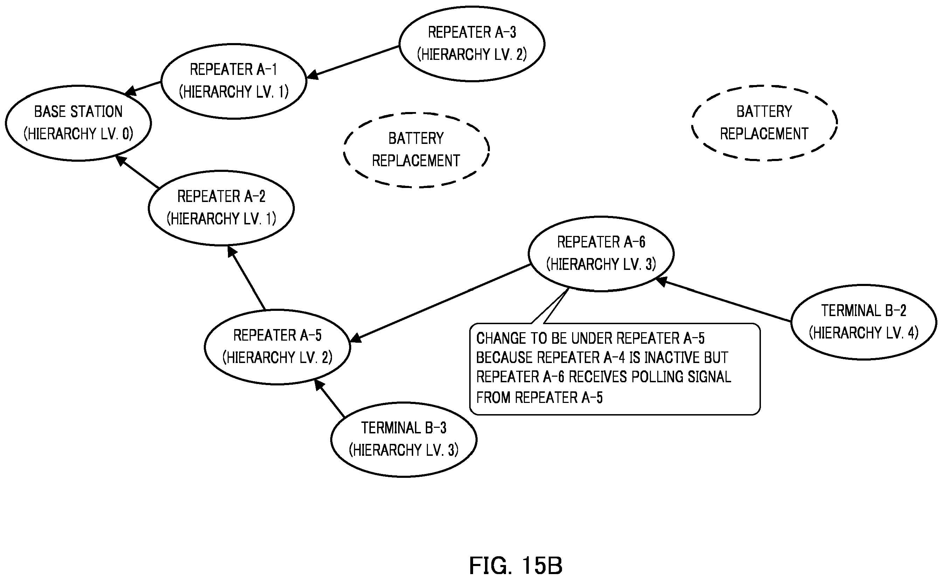

FIG. 15A illustrates the same hierarchical structure of the network constituting radio communication system 2 as FIG. 13E. It is herein assumed that repeater A-4 and terminal B-1 are removed from the hierarchical structure for battery replacement, as illustrated in FIG. 15B.

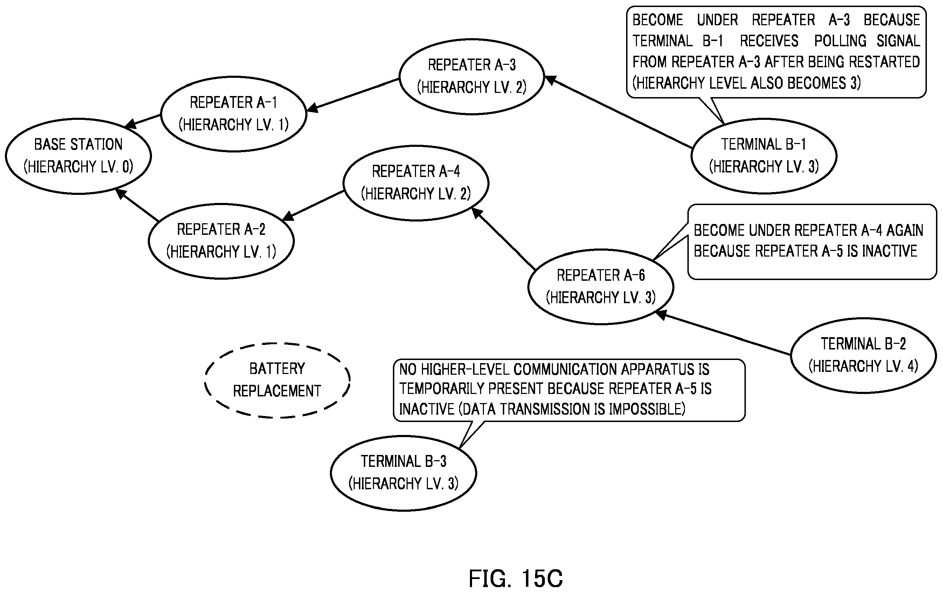

Repeater A-6, which is under repeater A-4 in FIG. 15A, becomes under repeater A-5 upon receiving a polling signal from repeater A-5 that is in the steady mode, and transitions to the steady mode, as illustrated in FIG. 15B. Then, as illustrated in FIG. 15C, it is assumed that repeater A-5 is removed from the hierarchical structure for battery replacement and terminal B-1 is restarted. In this case, restarted terminal B-1 is reset and enters an initial mode.

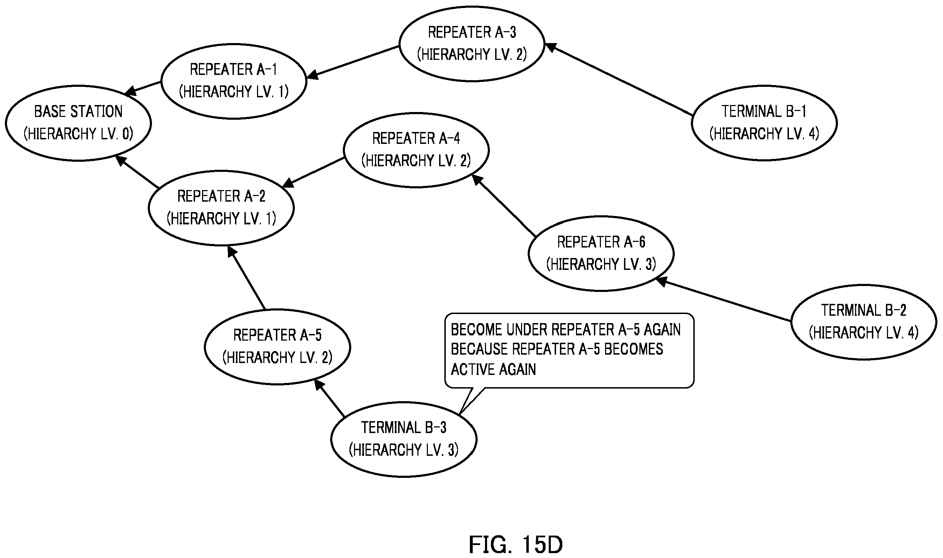

Repeater A-6 becomes under repeater A-4 again upon receiving a polling signal from repeater A-4 that is in the steady mode, and transitions to the steady mode, as illustrated in FIG. 15C. Terminal B-1 that is restarted and enters the initial mode becomes under repeater A-3 because terminal B-1 receives a polling signal from repeater A-3 in the steady mode earlier than receiving a polling signal from repeater A-6 in the steady mode, and sets the hierarchy number of its own to 3, which is obtained by adding 1 to 2 of the hierarchy number of repeater A-3, as illustrated in FIG. 15C. On the other hand, terminal B-3 connected to repeater A-5 cannot transmit and receive data because the higher-hierarchy communication apparatus is temporarily inactive. Then, it is assumed that repeater A-5 is restarted as illustrated in FIG. 15D. In this case, restarted repeater A-5 is reset and enters an initial mode.

Repeater A-5 that is reset and enters the initial mode becomes under repeater A-2 again upon receiving a polling signal from repeater A-2 that is in the steady mode, and transitions to the steady mode, as illustrated in FIG. 15D. Terminal B-3 becomes under repeater A-5 again upon receiving a polling signal from repeater A-5 that is in the steady mode, and transitions to the steady mode, as illustrated in FIG. 15D.

### [Embodiment 2]

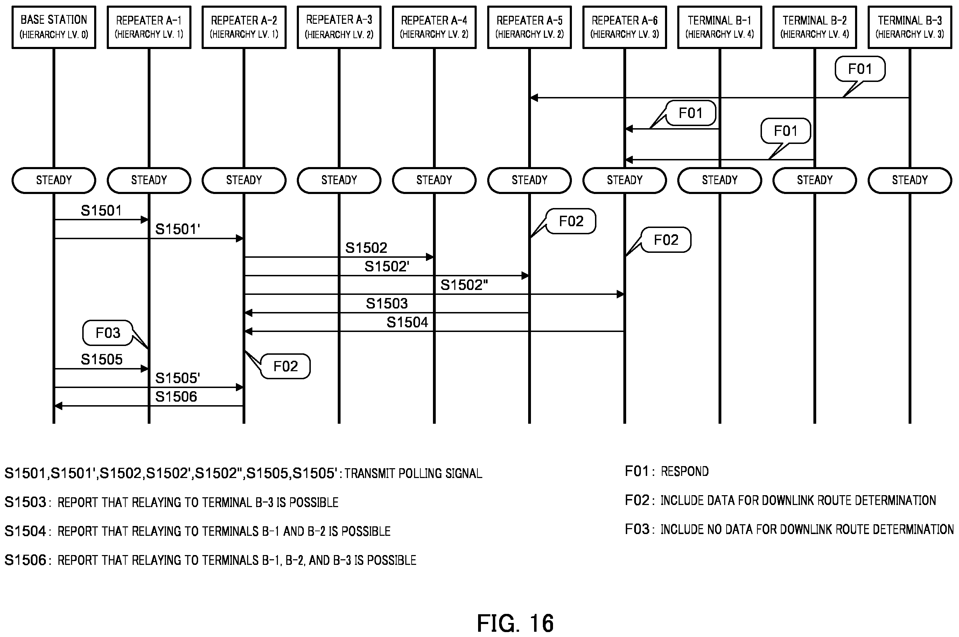

Next, Embodiment 2 of the present disclosure will be described with reference to FIGS. 16 to 20. Embodiment 2 is different from Embodiment 1 in that not only data transmission in the uplink but also data transmission in the downlink is assumed in Embodiment 2.

### <Radio Communication System>

The radio communication system according to Embodiment 2 has the same configuration as radio communication system 2 according to Embodiment 1; therefore, a description thereof will be omitted herein.

### <Configuration and Operation of Communication Apparatus Including Terminal, Repeater, and Base Station>

The communication apparatus according to Embodiment 2 also has the same configuration and operation as the communication apparatus according to Embodiment 1; therefore, most of the description thereof will be omitted herein, and only portions different from those of Embodiment 1 will be described below.

As described above, in Embodiment 2, not only uplink data transmission but also downlink data transmission is assumed. Thus, in the radio communication system according to Embodiment 2, bidirectional data communication in which not only data transmission from the terminal to the base station but also data transmission from the base station to the terminal may be performed. In such a case, the repeater or the terminal can perform both data communication in the uplink direction (the direction from the terminal to the base station) and data communication in the downlink direction (the direction from the base station to the terminal).

The communication method as described above includes, for example, the following first to fifth methods.

### (First Method)

The repeater or the terminal shares one radio device for uplink and downlink. In this case, the repeater or the terminal is configured so as to simultaneously perform communication in the uplink direction and communication in the downlink direction (or the radio device for uplink and the radio device for downlink may separately exist, but these radio devices may be closely coupled to operate in the same manner as one radio device). In this case, the repeater or the terminal can pause the operation only in a time period in which the operation can be paused in both the communication in the uplink direction and the communication in the downlink direction.

### (Second Method)

The repeater or the terminal shares one radio device for uplink and downlink. In this case, the repeater or the terminal performs uplink communication and downlink communication in different times (or the radio device for uplink and the radio device for downlink may separately exist, but these radio devices may be closely coupled to operate in the same manner as one radio device). In this case, for the communication in the uplink direction, the repeater or the terminal can pause the operation in the operation time period of the communication in the downlink direction, for the communication in the downlink direction, the repeater or the terminal can pause the operation in the operation time period of the communication in the uplink direction.

### (Third Method)

The repeater or the terminal individually includes an uplink radio device and a downlink radio device, and the two radio devices are loosely coupled to each other (operations of the radio device are independent of each other). In this case, the two radio devices may each pause operation at required timing (that is, regardless of the operation of the other radio device).

### (Fourth Method)

In the second method or the third method described above, the repeater or the terminal uses the same channel (frequency, spreading code, or the like) in the uplink direction and the downlink direction. In this case, the number of channels to be used is small, but the repeater or the terminal is basically asynchronous with another repeater or terminal, so that uplink and downlink are possibly mixed in one channel. Therefore, it is preferred that this fourth method be applied to the infrequent information exchange.

### (Fifth Method)

In the first method, the second method, or the third method described above, the repeater or the terminal uses different channels (frequency, spreading code, or the like) in the uplink direction and the downlink direction. In this case, the channel to be used is required twice as many as the fourth method described above, but uplink and downlink are not mixed in one channel. Therefore, this fifth method is applicable to the frequent information exchange.

Note that, in the uplink direction, the final destination is only one base station, but in the downlink direction, there is possibly a plurality of terminals as final destinations, and therefore, an ID needs to be allocated to the terminal to specify the destination in the above-described method.

The following is performed to realize transmission of downlink data.

The repeater that has received a "response" from the terminal reports to the repeater in a higher hierarchy that the repeater has received the response from the terminal, that is, the repeater can perform relaying to the terminal, in response to the polling signal received from the higher-level repeater or the base station, as described with the example illustrated in above-described FIG. 14. Then, the repeater that has received such a report similarly reports to the communication apparatus in a higher hierarchy (consequently, reports to the base station), so that each repeater can recognize the transmission destination for transmitting downlink data. In a case where the repeater transmits downlink data, when the repeater receives a polling signal from the repeater in a lower hierarchy or the terminal, the repeater determines whether the repeater or the terminal is the route to which the data is to be transmitted. Then, when the repeater or the terminal is the route to which the data is to be transmitted, the repeater transmits the downlink data to the repeater or the terminal in response to the polling signal from the repeater or the terminal, and when the repeater or the terminal is not the route to which the data is to be transmitted, the repeater does not respond to the polling signal from the repeater or the terminal. Such transmission of downlink data can be realized by transmitting, when the repeater is in the steady mode, information that is based on special data (data for downlink route determination indicating which terminal can be relayed via which repeater) in response to a polling signal from the repeater in a higher hierarchy or the base station.

### <Example of Data Communication Between Terminal, Repeater, and Base Station>

FIG. 16 is a sequence diagram for describing an exemplary data communication between the terminal, the repeater, and the base station in the radio communication system according to Embodiment 2 of the present disclosure. FIG. 16 illustrates a continuation of the sequence diagram of FIG. 14, that is, illustrates a data communication after the base station, the repeater, and the terminal all transition to the steady mode. Note that, in FIG. 16, the connection relationship between the base station, the repeaters, and the terminals is the same as illustrated in FIG. 11, and the steady mode is abbreviated as "steady".

First, after the base station, the repeaters, and the terminals are all transition to the steady mode, repeater A-5 has received a response from terminal B-3, and thus includes data for downlink route determination indicating that terminal B-3 can be relayed. Similarly, the repeater A-6 has received a response from terminal B-1 and a response from terminal B-2, and thus includes data for downlink route determination indicating that terminal B-1 and terminal B-2 can be relayed. Because repeater A-5 includes this data for downlink route determination, when receiving a polling signal from terminal B-3, repeater A-5 transmits the data addressed to terminal B-3 to terminal B-3, but does not transmit downlink data addressed to the terminal other than terminal B-3. Because repeater A-6 includes this data for downlink route determination, repeater A-6 transmits data addressed to terminal B-1 to terminal B-1 when receiving a polling signal from terminal B-1, and transmits data addressed to terminal B-2 to terminal B-2 when receiving a polling signal from terminal B-2, but does not transmit downlink data addressed to the terminal other than terminals B-1 and B-2.

The base station transmits polling signals to repeater A-1 and repeater A-2 in steps S1501 and 1501', respectively.

After receiving the polling signal from the base station, repeater A-2 transmits polling signals to repeater A-4, repeater A-5, and repeater A-6 in step S1502, step S1502', and step S1502", respectively.

In response to the polling signal received from repeater A-2, repeater A-5 reports to repeater A-2 that terminal B-3 can be relayed in step S1503.

In response to the polling signal received from repeater A-2, repeater A-6 reports to repeater A-2 that terminal B-1 and terminal B-2 can be relayed in step S1504.

Therefore, by receiving the reports from repeater A-5 and repeater A-6, repeater A-2 obtains data for downlink route determination indicating that terminal B-3 can be relayed via repeater A-5 and terminal B-1 and terminal B-2 can be relayed via repeater A-6. Because repeater A-2 includes this data for downlink route determination, when receiving a polling signal from repeater A-5, repeater A-2 transmits the data addressed to terminal B-3 to repeater A-5, but does not transmit downlink data addressed to the terminal other than terminal B-3. Further, because repeater A-2 includes this data for downlink route determination, when receiving a polling signal from repeater A-6, repeater A-2 transmits the data addressed to terminal B-1 or B-2 to repeater A-6, but does not transmit downlink data addressed to the terminal other than terminals B-1 and B-2.

The base station retransmits polling signals again to repeater A-1 and repeater A-2 in steps S1505 and 1505', respectively.

In response to the polling signal received from the base station, in step S1506, repeater A-2 reports to the base station that terminal B-3 can be relayed via repeater A-5 and terminal B-1 and terminal B-2 can be relayed via repeater A-6.

Therefore, by receiving the report from repeater A-2, the base station obtains data for downlink route determination indicating that terminal B-3 can be relayed via repeater A-2 and repeater A-5 and that terminal B-1 and terminal B-2 can be relayed via repeater A-2 and repeater A-6. Because the base station includes this data for downlink route determination, when receiving a polling from repeater A-2, the base station transmits downlink data addressed to a particular terminal in the same manner as described above. On the other hand, repeater A-1 includes no data for downlink route determination, and transmits no report to the base station indicating that a particular terminal can be relayed. Therefore, even when receiving a polling signal from repeater A-1, the base station transmits no downlink data addressed to the particular terminal to repeater A-1.

### <Example of Communication Between Terminals>

In a case of a call between terminals or the like, data obtained via a microphone or the like may be communicated between terminals via the base station, but in a case where these terminals are under the same repeater, such data may be communicated via the repeater without passing through the base station. Such a communication is not limited to a call between terminals, and may be a data communication in which sensing data obtained from sensors as described above is shared between terminals. Performing such a communication can reduce a delay compared to the communication via the base station, and can reduce the use of radio channels, which results in reducing the total power consumption. Note that, for performing such a communication, an ID needs to be allocated to the terminal.

Such a method of communicating via a repeater without passing through a base station includes, for example, the following first method and second method.

### (First Method)

It is assumed that the repeater knows the network topology according to the station placement design or the automatic hierarchy configuration described in the above example. When the destination of the data that has reached this repeater is under this repeater, the repeater does not forward the data to the repeater in a higher hierarchy or the base station. Instead, the repeater forwards the data in the direction of the destination (When the destination is directly under this repeater, to the terminal directly under this repeater, or when the destination is under the repeater under this repeater, to the repeater under this repeater). That is, even when receiving the polling signal from the repeater in a higher hierarchy or the base station, the repeater transmits the data in the direction of the destination in response to the polling signal from the direction of the destination, without revealing the presence of the data to the repeater in a higher hierarchy or the base station.

### (Second Method)

In a case where the repeater does not know the network topology, when receiving data from the repeater in a lower hierarchy or the terminal, the repeater transmits data to the repeater in a higher hierarchy or the base station in response to the polling signal from the repeater in a higher hierarchy or the base station, and stores the data in the cache. Further, in response to the polling signal from another repeater in a higher hierarchy or the base station, the repeater transmits the data in the cache to another repeater or the base station of the transmission source of the polling signal. Then, when the repeater receives a polling signal from a subordinate terminal, in a case where the transmission source of the polling signal is a terminal that is a destination of the data in the cache, the repeater transmits the data in the cache to the subordinate terminal and deletes the data in the cache. When receiving a polling signal from the subordinate repeater, not the subordinate terminal, the repeater also transmits the data to the subordinate repeater, and unless otherwise the subordinate repeater is another subordinate repeater that originally included the data and transmitted the data to the repeater. In this case, the repeater deletes the data in the cache after a predetermined time elapses after the data is stored in the cache. Further, when receiving data from the base station or the repeater in a higher hierarchy after transmitting a polling signal to the base station or the repeater in a higher hierarchy, the repeater compares the received data and the data in the cache. When it is determined that these data are the same as each other as a result of the comparison, the repeater deletes the received data. On the other hand, when it is determined that these data are not the same as each other as the result of the comparison, the repeater stores the received data in the cache. When a predetermined time elapses after the repeater stores the received data in the cache without the repeater receiving a polling signal from the repeater or the terminal in a lower hierarchy, the repeater deletes the data in the cache after the predetermined time elapses.

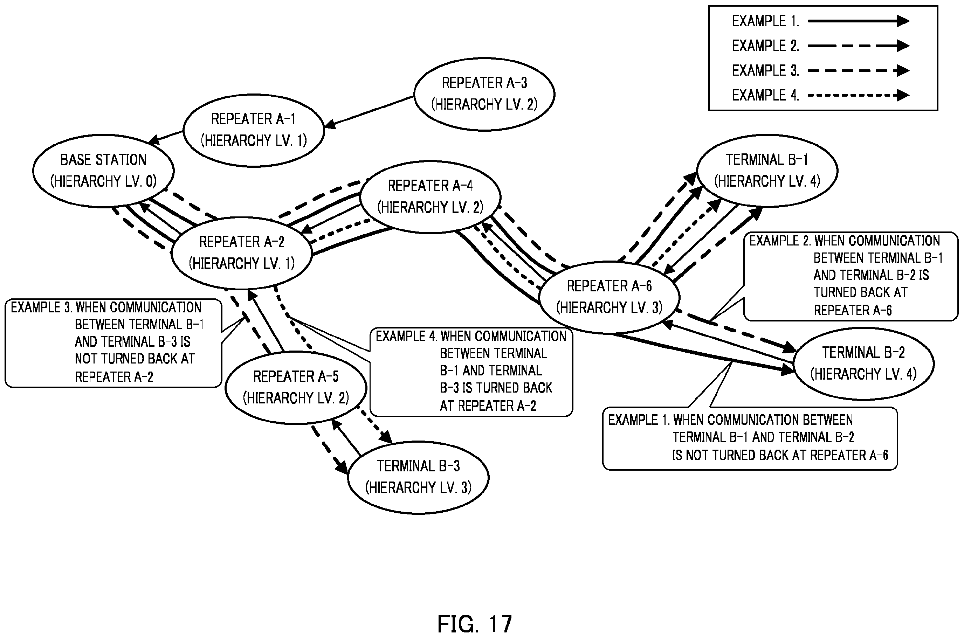

FIG. 17 is a diagram for describing an exemplary communication between terminals via the base station and the repeater and an exemplary communication between terminals via the repeater without passing through the base station according to Embodiment 2 of the present disclosure.

In the first example illustrated in FIG. 17, communication between terminal B-1 and terminal B-2 is performed not only via repeater A-6 but also via the base station. In the second example illustrated in FIG. 17, communication between terminal B-1 and terminal B-2 is performed by being turned back at repeater A-6 without passing through the base station. In the third example illustrated in FIG. 17, communication between terminal B-1 and terminal B-3 is performed not only via repeater A-2 but also via the base station. In the fourth example illustrated in FIG. 17, communication between terminal B-1 and terminal B-2 is performed by being turned back at repeater A-2 without passing through the base station.

### (Example of First Method)

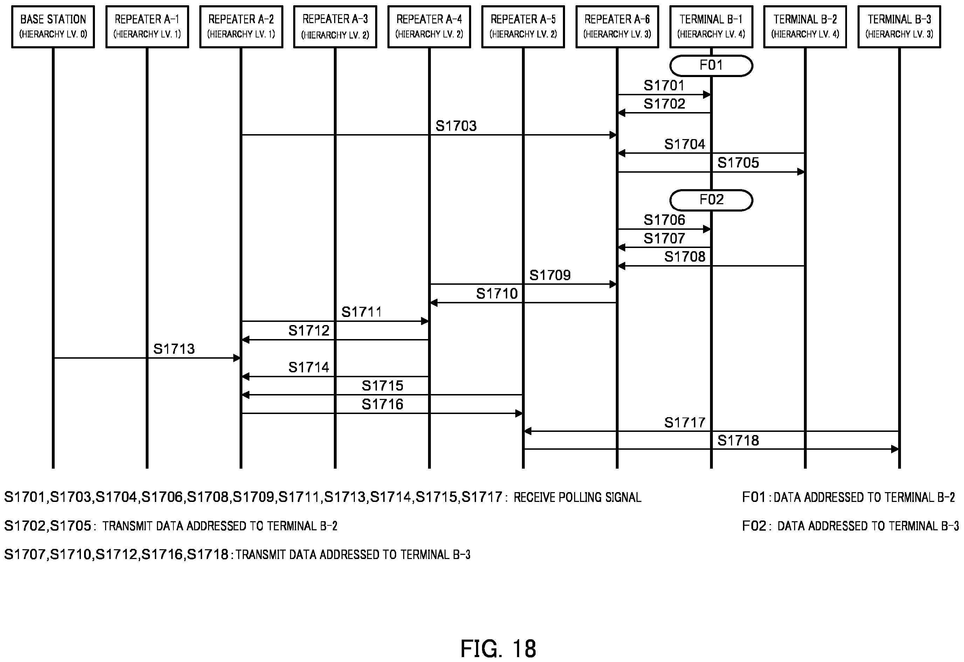

Next, an example of the above-described first method in which the communication apparatuses know the network topology will be described with reference to FIG. 18. FIG. 18 is a sequence diagram for describing the first example of data communication between terminals in the radio communication system according to Embodiment 2 of the present disclosure.

First, it is assumed that terminal B-1 includes the data addressed to terminal B-2.

Terminal B-1 receives a polling signal from repeater A-6 in step S1701.

Terminal B-1 includes the data addressed to terminal B-2, thereby transmitting the data addressed to terminal B-2 to repeater A-6 in step S1702.

In step S1703, repeater A-6 receives a polling signal from repeater A-2.

At this time, repeater A-6 knows the network topology and recognizes that the data addressed to terminal B-2 should be turned back at repeater A-6, so that repeater A-6 does not respond to the polling signal from repeater A-2.

In step S1704, repeater A-6 receives a polling signal from terminal B-2.

Repeater A-6 includes the data addressed to terminal B-2, thereby transmitting the data addressed to terminal B-2 to terminal B-2 in step S1705.

As described above, the communication between terminal B-1 and terminal B-2 is performed by repeater A-6 turning back the data from terminal B-1 addressed to terminal B-2 without passing through the base station.

Further, it is assumed that terminal B-1 includes the data addressed to terminal B-3.

Terminal B-1 receives a polling signal from repeater A-6 in step S1706.

Terminal B-1 includes the data addressed to terminal B-3, thereby transmitting the data addressed to terminal B-3 to repeater A-6 in step S1707.

In step S1708, repeater A-6 receives a polling signal from terminal B-2.

At this time, repeater A-6 includes only the data addressed to terminal B-3, and thus repeater A-6 does not respond to the polling signal from terminal B-2.

In step S1709, repeater A-6 receives a polling signal from repeater A-4.

At this time, repeater A-6 knows the network topology and knows that terminal B-3 is ahead of repeater A-4, and thus repeater A-6 transmits the data addressed to terminal B-3 to repeater A-4 in step S1710.

In step S1711, repeater A-4 receives a polling signal from repeater A-2.

At this time, repeater A-4 knows the network topology and knows that terminal B-3 is ahead of repeater A-2, and thus repeater A-4 transmits the data addressed to terminal B-3 to repeater A-2 in step S1712.

In step S1713, repeater A-2 receives a polling signal from the base station.

At this time, repeater A-2 knows the network topology and recognizes that the data addressed to terminal B-2 should be turned back at repeater A-2, so that repeater A-2 does not respond to the polling signal from the base station.

In step S1714, repeater A-2 receives a polling signal from repeater A-4.

At this time, because the data addressed to terminal B-2 is data that comes from repeater A-4, repeater A-2 does not respond to the polling signal from repeater A-4.

In step S1715, repeater A-2 receives a polling signal from repeater A-5.

At this time, repeater A-2 knows the network topology and knows that terminal B-3 is ahead of repeater A-5, and thus repeater A-2 transmits the data addressed to terminal B-3 to repeater A-5 in step S1716.

In step S1717, repeater A-5 receives a polling signal from terminal B-3.

Repeater A-5 includes the data addressed to terminal B-3, thereby transmitting the data addressed to terminal B-3 to terminal B-3 in step S1718.

As described above, the communication between terminal B-1 and terminal B-3 is performed by repeater A-2 turning back the data from terminal B-1 addressed to terminal B-3 without passing through the base station.

### (First Example of the Second Method)

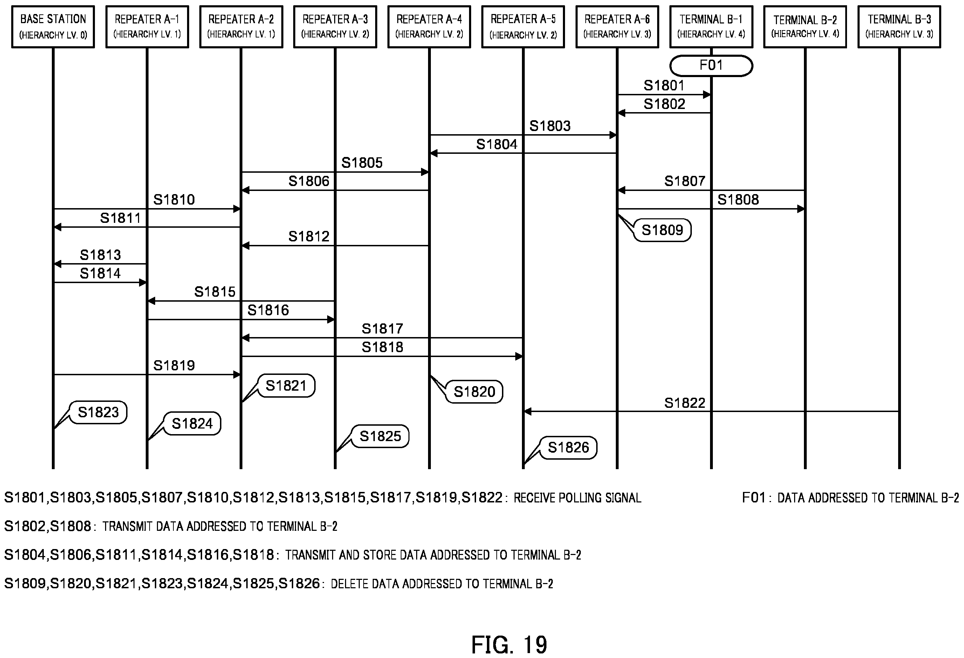

Next, the first example of the above-described second method in which the communication apparatuses do not know the network topology will be described with reference to FIG. 19. FIG. 19 is a sequence diagram for describing the second example of the data communication between terminals in the radio communication system according to Embodiment 2 of the present disclosure.

First, it is assumed that terminal B-1 includes the data addressed to terminal B-2.

Terminal B-1 receives a polling signal from repeater A-6 in step S1801.

Terminal B-1 includes the data addressed to terminal B-2, thereby transmitting the data addressed to terminal B-2 to repeater A-6 in step S1802.

In step S1803, repeater A-6 receives a polling signal from repeater A-4.

At this time, repeater A-6 does not know the network topology and recognizes that terminal B-2 is possibly ahead of repeater A-4. Therefore, in step S1804, repeater A-6 transmits the data addressed to terminal B-2 to repeater A-4, and stores the data addressed to terminal B-2 in the cache of repeater A-6.

In step S1805, repeater A-4 receives a polling signal from repeater A-2.

At this time, repeater A-4 does not know the network topology and recognizes that terminal B-2 is possibly ahead of repeater A-2. Therefore, in step S1806, repeater A-4 transmits the data addressed to terminal B-2 to repeater A-2, and stores the data addressed to terminal B-2 in the cache of repeater A-4.

In step S1807, repeater A-6 receives a polling signal from terminal B-2.

Repeater A-6 includes the data addressed to terminal B-2 (in the cache), thereby transmitting the data addressed to terminal B-2 to terminal B-2 in step S1808. Because repeater A-6 has transmitted the data addressed to terminal B-2 to the final destination (terminal B-2), repeater A-6 deletes the data addressed to terminal B-2 from the cache (that is, clears the cache) in step S1809.

As described above, the communication between terminal B-1 and terminal B-2 is performed by repeater A-6 turning back the data from terminal B-1 addressed to terminal B-2 without passing through the base station.

When the communication apparatuses do not knows the network topology, the following steps are further performed.

In step S1810, repeater A-2 receives a polling signal from the base station.

At this time, repeater A-2 does not know the network topology and recognizes that terminal B-2 is possibly ahead of the base station. Thus, in step S1811, repeater A-2 transmits the data addressed to terminal B-2 to the base station, and stores the data addressed to terminal B-2 in the cache of repeater A-2.

In step S1812, repeater A-2 receives a polling signal from repeater A-4. At this time, because the data addressed to terminal B-2 is data that came from repeater A-4, repeater A-2 does not respond to the polling signal from repeater A-4.

In step S1813, the base station receives a polling signal from repeater A-1.

At this time, the base station does not know the network topology and recognizes that terminal B-2 is possibly ahead of repeater A-1. Therefore, in step S1814, the base station transmits the data addressed to terminal B-2 to repeater A-1, and stores the data addressed to terminal B-2 in the cache of the base station.

In step S1815, repeater A-1 receives a polling signal from repeater A-3.

At this time, repeater A-1 does not know the network topology and recognizes that terminal B-2 is possibly ahead of repeater A-3. Therefore, in step S1816, repeater A-1 transmits the data addressed to terminal B-2 to repeater A-3, and stores the data addressed to terminal B-2 in the cache of repeater A-1.

In step S1817, repeater A-2 receives a polling signal from repeater A-5.

At this time, repeater A-2 does not know the network topology and recognizes that terminal B-2 is possibly ahead of repeater A-5. Therefore, in step S1818, repeater A-2 transmits the data addressed to terminal B-2 to repeater A-5, and stores the data addressed to terminal B-2 in the cache of repeater A-2.

In step S1819, repeater A-2 receives a polling signal from the base station.

At this time, because repeater A-2 has already transmitted the data addressed to terminal B-2 to the base station, repeater A-2 does not respond to the polling signal from the base station.

A predetermined time has elapsed since repeater A-4 stored the data addressed to terminal B-2 in the cache, so that repeater A-4 deletes the data addressed to terminal B-2 from the cache in step S1820.

A predetermined time has elapsed since repeater A-2 stored the data addressed to terminal B-2 in the cache, so that repeater A-2 deletes the data addressed to terminal B-2 from the cache in step S1821.

In step S1822, repeater A-5 receives a polling signal from repeater B-3.

At this time, repeater A-5 includes only the data addressed to terminal B-2, and thus repeater A-5 does not respond to the polling signal from terminal B-3.

A predetermined time has elapsed since the base station stored the data addressed to terminal B-2 in the cache, so that the base station deletes the data addressed to terminal B-2 from the cache in step S1823.

A predetermined time has elapsed since repeater A-1 stored the data addressed to terminal B-2 in the cache, so that repeater A-1 deletes the data addressed to terminal B-2 from the cache in step S1824.

A predetermined time has elapsed since repeater A-3 stored the data addressed to terminal B-2 in the cache, so that repeater A-3 deletes the data addressed to terminal B-2 from the cache in step S1825.

A predetermined time has elapsed since repeater A-5 stored the data addressed to terminal B-2 in the cache, so that repeater A-5 deletes the data addressed to terminal B-2 from the cache in step S1826.

### (Second Example of Second Method)

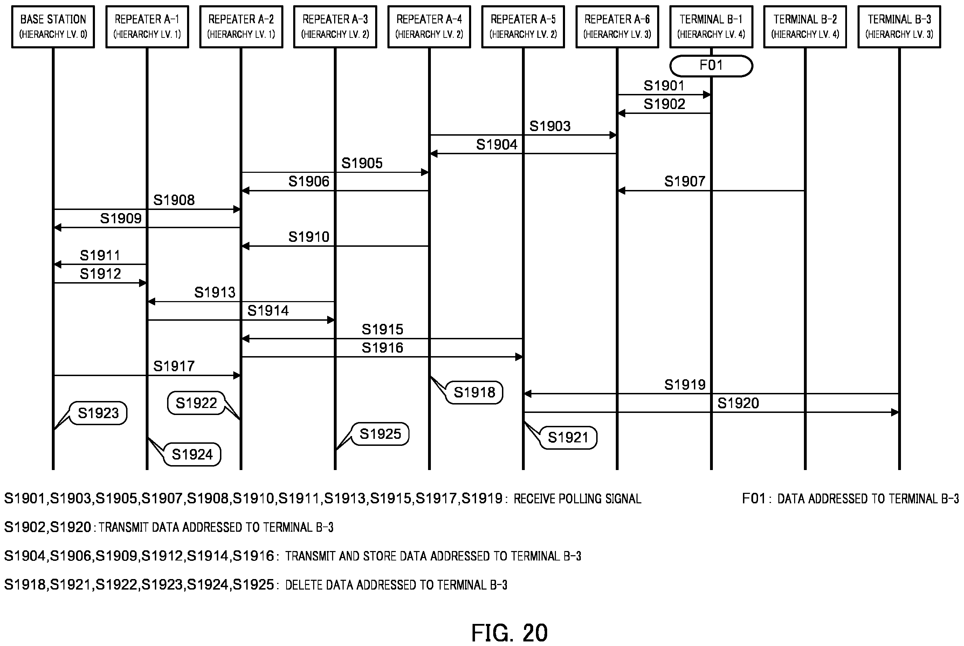

Next, the second example of the above-described second method in which the communication apparatuses do not know the network topology will be described with reference to FIG. 20. FIG. 20 is a sequence diagram for describing the third example of the data communications between the terminals in the radio communication system according to Embodiment 2 of the present disclosure.

First, it is assumed that terminal B-1 includes the data addressed to terminal B-3.

Terminal B-1 receives a polling signal from repeater A-6 in step S1901

Terminal B-1 includes the data addressed to terminal B-3, thereby transmitting the data addressed to terminal B-3 to repeater A-6 in step S1902.

In step S1903, repeater A-6 receives a polling signal from repeater A-4.

At this time, repeater A-6 does not know the network topology and recognizes that terminal B-3 is possibly ahead of repeater A-4. Therefore, in step S1904, repeater A-6 transmits the data addressed to terminal B-3 to repeater A-4, and stores the data addressed to terminal B-3 in the cache of repeater A-6.

In step S1905, repeater A-4 receives a polling signal from repeater A-2.

At this time, repeater A-4 does not know the network topology and recognizes that terminal B-3 is possibly ahead of repeater A-2. Therefore, in step S1906, repeater A-4 transmits the data addressed to terminal B-3 to repeater A-2, and stores the data addressed to terminal B-3 in the cache of repeater A-4.

In step S1907, repeater A-6 receives a polling signal from terminal B-2. At this time, repeater A-6 includes only the data addressed to terminal B-3, and thus repeater A-6 does not respond to the polling signal from terminal B-2.

In step S1908, repeater A-2 receives a polling signal from the base station.

At this time, repeater A-2 does not know the network topology and recognizes that terminal B-3 is possibly ahead of the base station. Thus, in step S1909, repeater A-2 transmits the data addressed to terminal B-3 to the base station, and stores the data addressed to terminal B-3 in the cache of repeater A-2.

In step S1910, repeater A-2 receives a polling signal from repeater A-4.

At this time, because the data addressed to terminal B-3 is data that came from repeater A-4, repeater A-2 does not respond to the polling signal from repeater A-4.

In step S1911, the base station receives a polling signal from repeater A-1.

At this time, the base station does not know the network topology and recognizes that terminal B-3 is possibly ahead of repeater A-1. Therefore, in step S1912, the base station transmits the data addressed to terminal B-3 to repeater A-1, and stores the data addressed to terminal B-3 in the cache of the base station.

In step S1913, repeater A-1 receives a polling signal from repeater A-3.

At this time, repeater A-1 does not know the network topology and recognizes that terminal B-3 is possibly ahead of repeater A-3. Therefore, in step S1914, repeater A-1 transmits the data addressed to terminal B-3 to repeater A-3, and stores the data addressed to terminal B-3 in the cache of repeater A-1.

In step S1915, repeater A-2 receives a polling signal from repeater A-5.

At this time, repeater A-2 does not know the network topology and recognizes that terminal B-3 is possibly ahead of repeater A-5. Therefore, in step S1916, repeater A-2 transmits the data addressed to terminal B-3 to repeater A-5, and stores the data addressed to terminal B-3 in the cache of repeater A-2.

In step S1917, repeater A-2 receives a polling signal from the base station.

At this time, because repeater A-2 has already transmitted the data addressed to terminal B-3 to the base station, repeater A-2 does not respond to the polling signal from the base station.

A predetermined time has elapsed since repeater A-4 stored the data addressed to terminal B-3 in the cache, so that repeater A-4 deletes the data addressed to terminal B-3 from the cache in step S1918.

In step S1919, repeater A-5 receives a polling signal from terminal B-3.

Repeater A-5 includes the data addressed to terminal B-3 (in the cache), thereby transmitting the data addressed to terminal B-3 to terminal B-3 in step S1920. Because repeater A-5 has transmitted the data addressed to terminal B-3 to the final destination (terminal B-3), repeater A-5 deletes the data addressed to terminal B-3 from the cache in step S1921.

As described above, the communication between terminal B-1 and terminal B-3 is performed by repeater A-2 turning back the data that comes from terminal B-1 and is addressed to terminal B-3, without passing through the base station (without using data turned back at the base station).

When the communication apparatuses do not know the network topology, the following steps are further performed.

A predetermined time has elapsed since repeater A-2 stored the data addressed to terminal B-3 in the cache, so that repeater A-2 deletes the data addressed to terminal B-3 from the cache in step S1922.

A predetermined time has elapsed since the base station stored the data addressed to terminal B-3 in the cache, so that the base station deletes the data addressed to terminal B-3 from the cache in step S1923.

A predetermined time has elapsed since repeater A-1 stored the data addressed to terminal B-3 in the cache, so that repeater A-1 deletes the data addressed to terminal B-3 from the cache in step S1924.

A predetermined time has elapsed since repeater A-3 stored the data addressed to terminal B-3 in the cache, so that repeater A-3 deletes the data addressed to terminal B-3 from the cache in step S1925.

### <Example of Polling Interval>

Next, an example of the polling interval of the repeater will be described. The repeater may be, for example, the repeater described in the example illustrated in above-described FIGS. 5 to 20.

The polling interval of such a repeater includes, for example, intervals of Example 1 to Example 8.

### (Example 1)

In a case where data transmitted from the terminal (that is, data obtained by a data generation device such as a sensor) is periodic data (e.g., a case of reporting temperature every minute, or the like), the period is known, and thus the polling interval may be set so as to correspond to the period.

### (Example 2)

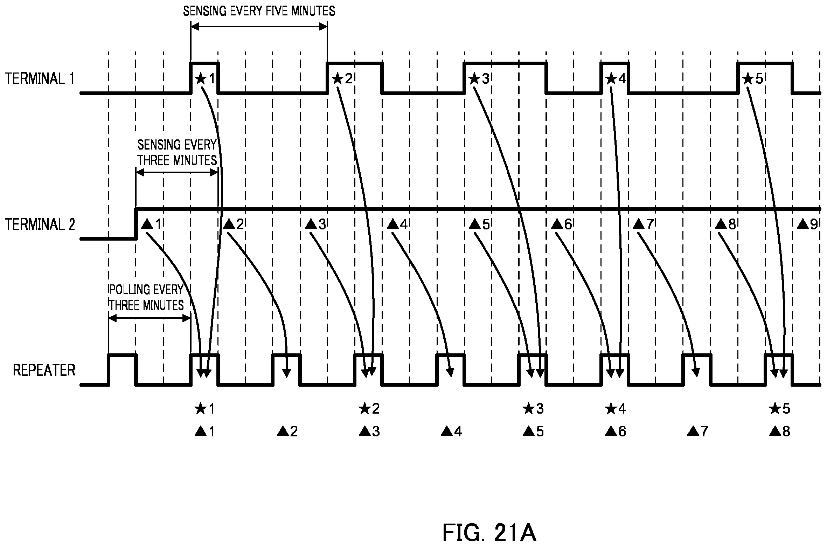

In above-described Example 1, when there is a plurality of terminals connected to a repeater, and the periods of the plurality of terminals (that is, the periods in which data is obtained by data generation devices such as sensors) are different from one another, the polling interval may be set to the shortest period among the sensing intervals (periods) of the plurality of terminals (data generation devices such as sensors). Such a configuration makes it possible to reduce the delay of the data having the shortest period. Note that the delay of the data with the longest period is the maximum delay. For example, as illustrated in FIG. 21A (in the example illustrated in FIG. 21A, the interval between the dotted lines represents one minute), when the sensing interval of terminal 1 is five minutes and the sensing interval of terminal 2 is three minute, the polling interval of the repeater can be three minutes.

### (Example 3)

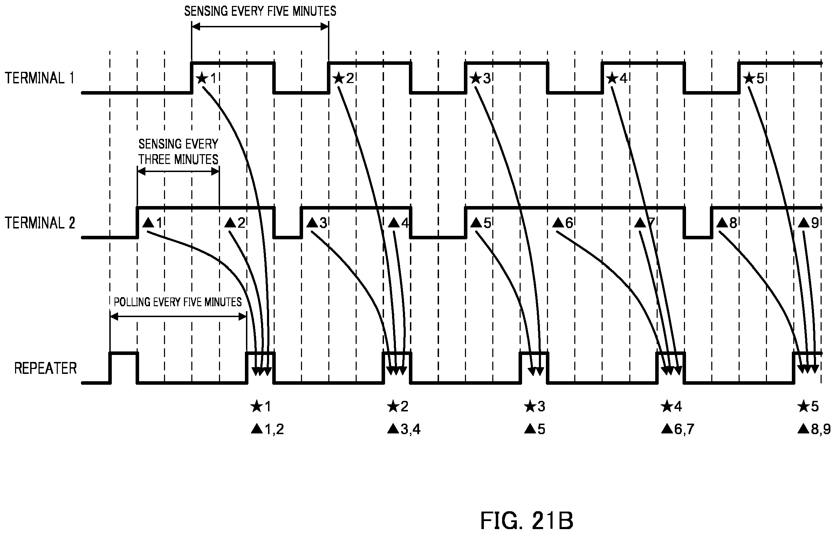

In above-described Example 1, in a case where there is a plurality of terminals connected to the repeater and the periods of the plurality of terminals are different from one another, the polling interval may be set to the longest period among the sensing intervals (periods) of the plurality of terminals. By such a configuration, the delay of the data having any period falls within the delay of the data having the longest period (maximum delay). For example, as illustrated in FIG. 21B (in the example illustrated in FIG. 21B, the interval between the dotted lines represents one minute), when the sensing interval of terminal 1 is five minutes and the sensing interval of terminal 2 is three minute, the polling interval of the repeater can be five minutes.

### (Example 4)

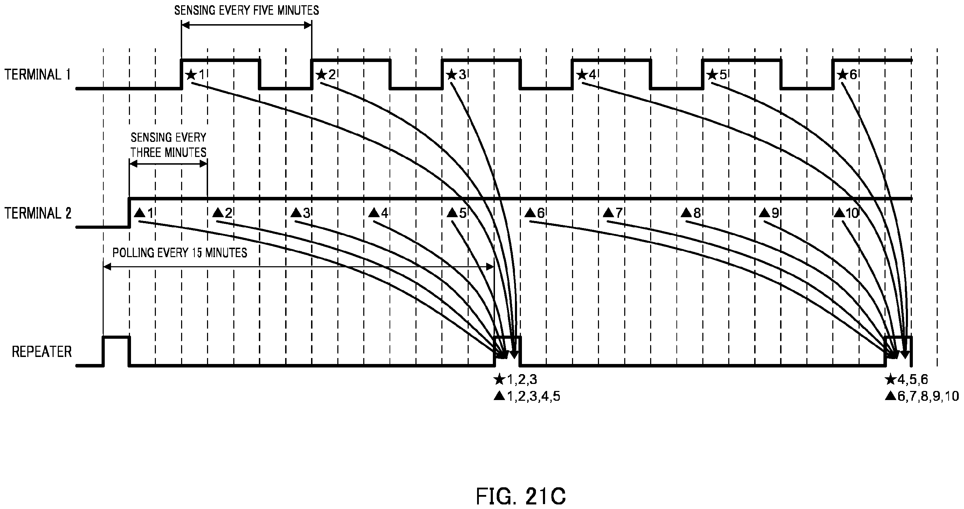

In above-described Example 1, when there is a plurality of terminals connected to the repeater and the periods of the plurality of terminals are different from one another, the polling interval may be set to the least common multiple of the sensing intervals (periods) of the plurality of terminals. The maximum delay becomes the least common multiple with such a configuration, so that the repeater can be in the operation pausing mode for a longer period of time, and can reduce the power consumption. For example, as illustrated in FIG. 21C (in the example illustrated in FIG. 21C, the interval between the dotted lines represents one minute), when the sensing interval of terminal 1 is five minutes and the sensing interval of terminal 2 is three minute, the polling interval of the repeater can be 15 minutes. In this case, as illustrated in FIG. 21C, the five pieces of data from terminal 1 and the three pieces of data from terminal 2 are simultaneously transmitted to the repeater.

### (Example 5)

In a case where, even though the data generation or the data acquisition is irregular, the next data generation or data acquisition is predictable (e.g., a case where the time at which the next bus comes after a bus comes is roughly known), the polling interval may be set based on the prediction. Above-described Example 1 or Example 2 is also applicable to Example 5. Example 4 is not applicable to Example 5 because the concept of the least common multiple is not assumed in Example 5, but the same effect can be obtained by setting the time to 20 minutes or the like.

### (Example 6)

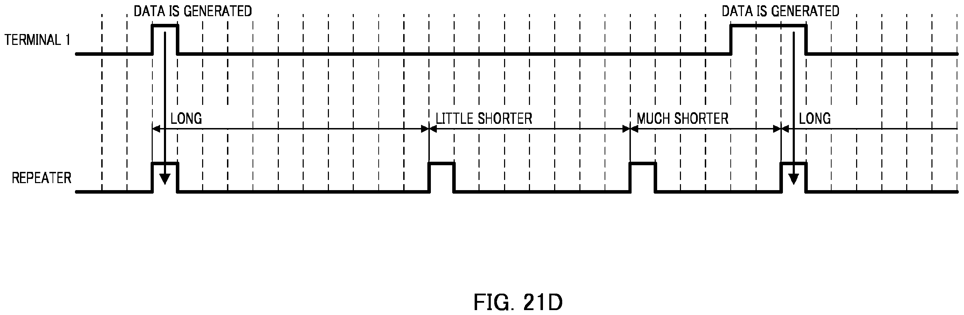

In above-described Example 5, in a case where the next data generation or data acquisition is not predictable but is assumed not to be done for a while (e.g., such as a case of a product delivery truck to a convenience store, that is, a case where the time when it comes is not known but it is assumed that it will not come for a while once it comes), for example, as illustrated in FIG. 21D (in the example illustrated in FIG. 21D, the interval between the dotted lines represents one minute), the long polling interval is set first, and then the polling intervals are set so as to be gradually shortened, so that the total operation pausing time can be increased.

### (Example 7)

In a case of a communication using uplink and downlink, the time when the communication starts is not known, but it is assumed that the communication continues for a while once the communication starts. In such a case, as described above, it is assumed that the repeater includes an uplink radio device and a downlink radio device that each operate independently. In this case, when there is data in the uplink direction, the polling interval is set so as to change the mode of the radio device for downlink to the steady mode, using the data as a trigger, and when there is data in the downlink direction, the polling interval is set so as to change the mode of the radio device for uplink to the steady mode, using the data as a trigger.

### (Example 8)

As described above, in the case of a communication using uplink and downlink, it is not known when the communication starts, but it is assumed that the communication continues for a while once the communication starts. In such a case, as described above, it is assumed that the repeater includes an uplink radio device and a downlink radio device that each operate independently. In this case, while the communication continues, both the uplink radio device and the downlink radio device are set to the steady mode, and when the communication is stopped and a certain amount of time (e.g., 5 seconds) elapses, the polling interval is set so that both the uplink radio device and the downlink radio device transition to the operation pausing mode.

With respect to the intervals of Example 2 to Example 4, the polling interval of the repeater may be appropriately set in accordance with the allowed data delay.

In the above-described embodiments, the term "processor" or with a suffix, such as "-er," "-or," or "-ar" used for the name of a component may be replaced with another term such as "circuit (circuitry)," "assembly," "device," "unit," or "module."

The description has been given of embodiments with reference to the drawings, but the present disclosure is not limited to the examples. Obviously, a person skilled in the art would arrive variations and modifications within a scope described in claims. It is understood that these variations and modifications are within the technical scope of the present disclosure. In addition, component elements in the embodiments may be optionally combined without departure from the spirit of the present disclosure.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

This application is based on Japanese Patent No. 2020-201115 filed on December 3, 2020, the disclosure of which including the specification, drawings and abstract is incorporated herein by reference in its entirety.

### Industrial Applicability

An embodiment of the present disclosure is useful in a radio communication system that can be operated with low power consumption.

### Reference Signs List

2 Radio communication system
A, A-1 to A-6 Repeater
B, B-1 to B-3, B-X Terminal
30 Communication apparatus
31 Control apparatus
32 Storage apparatus
33 Radio device
34 Antenna

## Claims

1. A radio communication system, comprising:
a terminal that includes a data generation device, repeatedly obtains predetermined data from the data generation device, and operates while switching between a first mode and a second mode whose power consumption is lower than power consumption of the first mode; and
a repeater that is capable of communicating with the terminal, and operates while switching between a third mode and a fourth mode whose power consumption is lower than power consumption of the third mode, wherein
the repeater
transmits a polling signal to the terminal in the third mode within a predetermined time,
transitions from the third mode to the fourth mode within the predetermined time after transmitting the polling signal, and
transitions from the fourth mode to the third mode before the predetermined time elapses, and
the terminal
operates in the first mode while the terminal has the predetermined data, and
transitions from the first mode to the second mode after transmitting the predetermined data to the repeater in response to the polling signal.

2. The radio communication system according to claim 1, wherein
the terminal transitions from the second mode to the first mode before obtaining next the predetermined data from the data generation device.

3. The radio communication system according to claim 1, wherein
the repeater transitions from the third mode to the fourth mode within the predetermined time after transmitting an ACK signal indicating that the repeater has received the predetermined data.

4. The radio communication system according to claim 1, further comprising a communication apparatus that is another repeater or a base station, wherein
the communication apparatus transmits a polling signal to the repeater, and
the repeater
transmits the predetermined data to the communication apparatus in response to the polling signal, and
transitions from the third mode to the fourth mode within the predetermined time after transmitting the predetermined data.

5. The radio communication system according to claim 1, wherein
a plurality of the terminals exists, and
the repeater
transmits a first polling signal to a first terminal and a second polling signal to a second terminal in the third mode within the predetermined time, and
transitions from the third mode to the fourth mode within the predetermined time after transmitting the first polling signal and the second polling signal.

6. The radio communication system according to claim 1, wherein
a plurality of the repeaters exists,
a first repeater transmits a first polling signal to the terminal,
a second repeater transmits a second polling signal to the terminal, and
the terminal, in response to either one of the first or the second polling signal, transmits the predetermined data to either one of the first or the second repeater that has transmitted the either one of the first or the second polling signal, and
the either one of the first or the second repeater that has received the predetermined data transitions from the third mode to the fourth mode within the predetermined time after receiving the predetermined data.

7. The radio communication system according to claim 6, wherein
the terminal determines to respond to either the first polling signal or the second polling signal based on a network topology of the radio communication system stored in the terminal.

8. The radio communication system according to claim 7, wherein
the terminal transmits the predetermined data to a repeater whose route to a final destination of the data is the shortest.

9. The radio communication system according to claim 1, further comprising a base station, a plurality of the terminals, and a plurality of the repeaters, wherein
a hierarchy of a network constituting the radio communication apparatus is configured by hierarchy auto-configuration processing including:
broadcasting, by the base station, a signal including a hierarchy number indicating a depth level of the hierarchy,
configuring, by a first repeater that has received the signal broadcasted by the base station, a hierarchy number of the first repeater based on the hierarchy number included in the signal, and broadcasting a signal including the hierarchy number of the first repeater,
configuring, by a second repeater that has received the signal broadcasted by the first repeater, a hierarchy number of the second repeater based on the hierarchy number included in the signal, and broadcasting a signal including the hierarchy number of the second repeater, and
configuring, by at least one of the plurality of terminals that has received the signal broadcasted by the base station or the signal broadcasted by at least one of the plurality of repeaters including the first and the second repeaters, a hierarchy number of the at least one of the plurality of terminals based on the hierarchy number included in the signal, and transmitting a response to the base station or the at least one of the plurality of repeaters that has broadcasted the signal received by the at least one of the plurality of terminals, and
each terminal responds to a polling signal from a repeater in a higher hierarchy or the base station based on the hierarchy that has been configured.

10. The radio communication system according to claim 9, wherein
the hierarchy that has been configured is reconfigured by the hierarchy auto-configuration processing in accordance with a change in a configuration of the network constituting the radio communication system.

11. The radio communication system according to claim 9, wherein
a first terminal obtains data addressed to the first terminal that has been transmitted from a second terminal by:
receiving, by a repeater or the base station that has received the response transmitted by the first terminal, a report, from the first terminal, that relaying to the first terminal is possible,
receiving, by each repeater and the base station, a report, from another repeater in a lower hierarchy, that relaying to particular terminals including the first terminal is possible via the another repeater in the lower hierarchy,
transmitting, by the second terminal, the data addressed to the first terminal to a repeater in a higher hierarchy in response to a polling signal from the repeater in the higher hierarchy,
transmitting, by each repeater capable of performing relaying to the first terminal, the data addressed to the first terminal to another repeater in a higher hierarchy or the base station in response to a polling signal from the another repeater in the higher hierarchy or the base station,
transmitting, by the base station, the data addressed to the first terminal to a repeater in a lower hierarchy or the first terminal in response to a polling signal from the repeater in the lower hierarchy or the first terminal, and
transmitting, by each repeater that has received the data addressed to the first terminal and is capable of performing relaying to the first terminal, the data addressed to the first terminal to another repeater in a lower hierarchy or the first terminal in response to a polling signal from the another repeater in the lower hierarchy or the first terminal.

12. The radio communication system according to claim 1, further comprising a plurality of the terminals, and a plurality of the repeaters, wherein
a first terminal obtains data addressed to the first terminal that has been transmitted from a second terminal by:
transmitting, by the second terminal, the data addressed to the first terminal to a repeater in a higher hierarchy in response to a polling signal from the repeater in the higher hierarchy,
transmitting, by each repeater that has received the data addressed to the first terminal, the data addressed to the first terminal to another repeater in a higher hierarchy in response to a polling signal from the another repeater in the higher hierarchy, and transmitting the data addressed to the first terminal to another repeater in a lower hierarchy in response to a polling signal from the another repeater in the lower hierarchy, and
transmitting, by a repeater in a higher hierarchy than the first terminal, the data addressed to the first terminal to the first terminal in response to a polling signal from the first terminal.

13. A radio communication method in a radio communication system including: a terminal that includes a data generation device, repeatedly obtains predetermined data from the data generation device, and operates while switching between a first mode and a second mode whose power consumption is lower than power consumption of the first mode; and a repeater that is capable of communicating with the terminal and operates while switching between a third mode and a fourth mode whose power consumption is lower than power consumption of the third mode, the radio communication method comprising:
transmitting, by the repeater, a polling signal to the terminal in the third mode within a predetermined time,
performing, by the repeater, a transition from the third mode to the fourth mode within the predetermined time after the repeater transmits the polling signal,
performing, by the repeater, a transition from the fourth mode to the third mode before the predetermined time elapses,
operating, by the terminal, in the first mode while the terminal has the predetermined data,
performing, by the terminal, a transition from the first mode to the second mode after the terminal transmits the predetermined data to the repeater in response to the polling signal.
